# EUROPEAN PATENT APPLICATION

(11) **EP 4 607 870 A1**
(43) Date of publication of application: **27.08.2025**
(21) Application number: 22963764.0
(22) Date of filing: 31.10.2022
(51) Int. Cl.: H04L 27/00

(54) **COMMUNICATION METHOD AND APPARATUS**

(71) Applicant: Huawei Technologies Co., Ltd., Shenzhen, Guangdong 518129 (CN)
(72) Inventor: SONG, Yurong, Shenzhen, Guangdong 518129 (CN); LIU, Fei, Shenzhen, Guangdong 518129 (CN); WANG, Donghui, Shenzhen, Guangdong 518129 (CN)
(74) Representative: Gill Jennings & Every LLP
(86) International application number: PCT/CN2022/128749
(87) International publication number: WO 2024/092444

(57) **Abstract**

This application provides a communication method. The method includes: A first module executes a first security service based on a first request message received from a requester, where the first request message is used to request one or more trusted services, the requester includes a first node or a second node, the first module is a module serving the first node, and the second module is a module serving the second node; and the first module sends a first feedback message to the requester, where the first feedback message is used to feed back an execution result of the first security service to the requester. In this way, a security function is opened to different communication nodes, procedures of the security function are standardized, and modularization of the security function is implemented. This facilitates independent deployment, flexible expansion, and convenient maintenance of the security function.

## Description

### TECHNICAL FIELD

This application relates to the communication field, and more specifically, to a communication method and a communication apparatus.

### BACKGROUND

With development of communication technologies, communication-related functions are provided in a form of services, and have advantages such as modularization, openness, easy expansion, and flexible deployment. For example, a core network sets corresponding network functions (network functions, NFs) for different types of communication services, to provide corresponding services.

Currently, a security function is set as a function of each communication node, and the communication node can call the security function. An operation of setting the security function is complex and requires heavy workload. This does not comply with a development trend of a future network. The security function is set on each NF, and modification on a security protocol usually involves a plurality of NFs in a procedure. Consequently, deployment is complex, and maintenance costs are high. In addition, when network vulnerabilities are exploited, and attacks are about to occur or have occurred, it is challenging to quickly upgrade security capabilities because the security capabilities embedded in different network functions are different from each other. As a communication service has an increasingly high security requirement, it is clear that existing security function deployment cannot meet a communication requirement, resulting in a communication security problem.

### SUMMARY

This application provides a communication method and a communication apparatus, so that an independent security function can be deployed, to enable an independent security service in a communication node, thereby ensuring independent update and maintenance of the security function, and improving communication security performance.

According to a first aspect, a communication method is provided. The method may be performed by a first module. The first module may be a security functional unit, a module, or a device, or may be a chip or a circuit in a security functional unit, a module, or a device, or may be a logical module or software that can implement all or some security functions. This is not limited in this application.

The method includes: A first module executes a first security service based on a first request message received from a requester, where the first security service is used to perform at least one of the following operations: calling a security algorithm, obtaining a security parameter, or requesting a second security service from a second module, the first request message is used to request one or more trusted services, the requester includes a first node or a second node, the first module is a module serving the first node, and the second module is a module serving the second node; and the first module sends a first feedback message to the requester, where the first feedback message is used to feed back an execution result of the first security service to the requester.

In this application, the first module and the second module are security functional modules serving different communication nodes.

Optionally, the first module may further execute the first security service based on a first notification message received from the requester. The first notification message may be status change notification information of the requester. For example, the terminal device accesses the access network device.

Optionally, the first module may alternatively autonomously trigger execution of the first security service. For example, the first module executes the first security service based on a first periodicity, or the first module executes the first security service based on a first timer.

The first periodicity or the first timer may be preset.

For example, the first module may periodically upload data to a blockchain.

A periodic trusted service request corresponds to an existing network in which authentication is periodically triggered. This improves security.

In a possible implementation, when a first requester is the first node, the first request message includes an identifier of the second node, indicating a destination node of a trusted service, for example, indicates a to-be-authenticated party in an authentication service, or indicates an attester (attester) in a trusted attestation service.

In a possible implementation, when the requester is the second module, the first request message includes the security parameter, and the security parameter is used by the first module to execute a specific security algorithm.

In a possible implementation, when the requester is the second node, the first module may obtain the security parameter that needs to be input into the security algorithm. For example, an input parameter used when the first module executes a specific security algorithm is preset or may be directly obtained by the first module. For example, in a trusted attestation service, a blockchain timestamp may be used as a challenge value in the trusted attestation service, and the first module inputs the challenge value as a parameter of the security algorithm.

According to the communication method provided in this application, the first module serving the first communication node may execute a secure and trusted service based on a request of any communication node, and feed back an execution result to the requested communication node. In this way, a security function is opened to different communication nodes, procedures of the security function are standardized, and modularization of the security function is implemented. This facilitates independent deployment, flexible expansion, and convenient maintenance of the security function. Further, in this process, the security parameter and the like generated when the trusted service is executed only need to be processed in the first module, and the communication node does not need to participate in transmission. This can improve communication security.

In addition, the first request message may be used to request one or more trusted services. In this application, when a plurality of trusted services are requested, the first request message includes a trusted service list, so that efficiency is higher.

With reference to the first aspect, in some implementations of the first aspect, the requester is the first node, and the first request message includes an identifier of the second node.

Based on the foregoing technical solution, in this application, when the communication node requests the security service, the identifier of the destination node of the trusted service may be carried in the request message. The first module may determine, based on the identifier of the destination node of the trusted service, a trusted policy corresponding to the identifier, and further determine a specific security algorithm and a used security parameter based on the trusted policy. However, in the conventional technology, when a communication node requests a security function, a preprocessing result of the communication node is required, for example, calculation of the security algorithm or obtaining of the security parameter. This simplifies processing of the first node, and protects transmission of the security parameter.

With reference to the first aspect, in some implementations of the first aspect, the first security service is an authentication service; and that a first module executes a first security service includes: The first module executes the authentication service based on the first request message, to obtain a first parameter set; the first module sends a second request message to the second module through the first node and the second node, where the second request message includes a second parameter set, and the second parameter set is from the first parameter set; the first module receives a second feedback message from the second module through the first node and the second node, where the second feedback message includes an authentication response, and the authentication response is used to feed back an authentication service result of the second module to the first module; and the first module executes the authentication service based on the authentication response, and sends the first feedback message to the first node, where the first feedback message is used to feed back an authentication result of the second node to the first node.

Based on the foregoing solution, a communication node that needs the authentication service may perform an authentication procedure through the deployed first module, an authentication vector and the authentication response may be exchanged only between security functional modules of communication nodes, and the first module may determine, based on the identifier of the second node in the request message, the authentication parameter that needs to be input into the authentication algorithm, so that the authentication service is performed, and the communication node does not need to perform calculation processing. This simplifies a processing process of the communication node, and improves security. In this way, an independent security service is enabled in the communication node, and communication security performance is improved.

With reference to the first aspect, in some implementations of the first aspect, the first security service is a trusted attestation service; and that the first module executes a first security service includes: The first module executes the trusted attestation service based on the first request message to obtain a challenge value; the first module sends a second request message to the second module, where the second request message includes the challenge value; the first module receives a second feedback message from the second module, where the second feedback message includes attestation evidence, and the attestation evidence is used by the first module to verify whether the second module is trusted; and the first module executes the trusted attestation service based on the attestation evidence, and sends the first feedback message to the first node, where the first feedback message is used to feed back a trusted attestation result of the second node to the first node.

Based on the foregoing solution, a communication node that requires the trusted attestation service may perform a trusted attestation procedure through the deployed first module, and the attestation evidence, the reference value, the challenge value, and the like may be exchanged only between security functional modules of communication nodes, the first module may determine, based on the identifier of the second node in the request message, the trusted attestation algorithm and the trusted attestation parameter that needs to be input, to generate the challenge value without being processed by the communication node. This further improves security.

With reference to the first aspect, in some implementations of the first aspect, the first security service is a data upload service of a blockchain, the first request message includes data to be uploaded to the blockchain, and the first feedback message indicates whether the data is successfully uploaded to the blockchain.

Based on the foregoing solution, a communication node that requires the blockchain data upload service may execute a data upload procedure by using the deployed security functional module, and the first module independently executes data processing processes such as permission authentication and data format conversion. This improves security.

With reference to the first aspect, in some implementations of the first aspect, the first security service is a data download service of a blockchain, the first request message includes indication information of data to be downloaded from the blockchain, and the first feedback message includes downloaded data or indicates that the data fails to be downloaded or is successfully downloaded.

Based on the foregoing solution, a communication node that requires the blockchain data download service may execute a data download service procedure by using the deployed security functional module, and the first module independently executes processes such as permission authentication and a data download request. This improves security.

With reference to the first aspect, in some implementations of the first aspect, the first security service is an encryption service, the first service request message includes a plaintext message, and the first feedback message is a ciphertext message.

Based on the foregoing solution, a communication node that needs the encryption service may perform an encryption procedure by using the deployed second module. The second module determines an encryption key based on the identifier of the communication node, and inputs the encryption key and the plaintext message into the encryption algorithm to generate the ciphertext message. The encryption key is stored in the first module and does not pass through the communication node. This improves security. In this way, an independent security service is enabled in the communication node, and communication security performance is improved.

With reference to the first aspect, in some implementations of the first aspect, the first security service is a decryption service, the first service request message includes a ciphertext message, and the first feedback message is a plaintext message.

Based on the foregoing solution, a communication node that needs the decryption service may perform a decryption procedure by using the deployed first module. The first module determines a decryption key based on the identifier of the communication node, and inputs the decryption key and the ciphertext message into the decryption algorithm to generate the plaintext message. The decryption key is stored in the first module without passing through the communication node. This improves security. In this way, an independent security service is enabled in the communication node, and communication security performance is improved.

According to a second aspect, a communication method is provided. The method may be performed by a requester. The requester may be a terminal device, an access network device, or a security functional module (a second module), or may be a chip or a circuit in a terminal device, an access network device, or a security functional module, or may be a logical module or software that can implement all or some functions of a terminal device, an access network device, or a security functional module. This is not limited in this application.

The method includes: A requester sends a first request message, where the first request message is used to request a first module to execute a first security service, the first security service is used to perform at least one of the following operations: calling a security algorithm, obtaining a security parameter, or requesting a second security service from a second module, the requester includes a first node or a second node, the first module is a module serving the first node, and the second module is a module serving the second node; and the requester receives a first feedback message from the first module, where the first feedback message is used to feed back an execution result of the first security service.

In this application, the requester may further send a first notification message. The first notification message may be status change notification information of the requester. For example, the terminal device accesses the access network device.

According to the communication method provided in this application, the requester having a requirement for a trusted service sends a request to the first module, and sends an identifier of a target node of the trusted service to the first module. The first module may execute the trusted service based on the identifier, and feed back a result of executing the trusted service to the requester. In this process, the requester can directly obtain the result of the trusted service without participating in calculation and processing. This simplifies the processing process of the requester and ensures communication security.

With reference to the second aspect, in a possible implementation, the requester is the first node, and the first request message includes an identifier of the second node.

According to a third aspect, a communication apparatus is provided. The apparatus may be a first module. The first module may be a security functional unit, a module, or a device, or may be a chip or a circuit in a security functional unit, a module, or a device, or may be a logical module or software that can implement all or some security functions. This is not limited in this application.

The apparatus includes: a processing unit, configured to execute a first security service based on a first request message received from a requester, where the first security service is used to perform at least one of the following operations: calling a security algorithm, obtaining a security parameter, or requesting a second security service from a second module, the first request message is used to request one or more trusted services, the requester includes a first node or a second node, the first module is a module serving the first node, and the second module is a module serving the second node; and a transceiver unit, configured to send a first feedback message to the requester, where the first feedback message is used to feed back an execution result of the first security service to the requester.

With reference to the third aspect, in some implementations of the third aspect, the first security service is an authentication service, and the processing unit is specifically configured to execute the authentication service based on the first request message, to obtain a parameter set of a first authentication service; the transceiver unit is specifically configured to send a second request message to the second module through the first node and the second node, where the second request message includes a parameter set of a second authentication service, and the parameter set of the second authentication service is from the parameter set of the second authentication service; the transceiver unit is further configured to receive a second feedback message from the second module through the first node and the second node, where the second feedback message includes an authentication response, and the authentication response is used to feed back an authentication service result of the second module to the first module; and the transceiver unit is further configured to: execute the authentication service based on the authentication response, and send the first feedback message to the first node, where the first feedback message is used to feed back an authentication result of the second node to the first node.

With reference to the third aspect, in some implementations of the third aspect, the first security service is a trusted attestation service, and the processing unit is further configured to execute the trusted attestation service based on the first request message to obtain a challenge value; the transceiver unit is further configured to send a second request message to the second module, where the second request message includes the challenge value; the transceiver unit is further configured to receive a second feedback message from the second module, where the second feedback message includes attestation evidence, and the attestation evidence is used by the first module to verify whether the second module is trusted; and the transceiver unit is further configured to: execute the trusted attestation service based on the attestation evidence, and send the first feedback message to the first node, where the first feedback message is used to feed back a trusted attestation result of the second node to the first node.

With reference to the third aspect, in some implementations of the third aspect, the first security service is a data upload service of a blockchain, the first request message includes data to be uploaded to the blockchain, and the first feedback message indicates whether the data is successfully uploaded to the blockchain.

With reference to the third aspect, in some implementations of the third aspect, the first security service is a data download service of a blockchain, the first request message includes indication information of data to be downloaded from the blockchain, and the first feedback message includes downloaded data or indicates that the data fails to be downloaded or is successfully downloaded.

With reference to the third aspect, in some implementations of the third aspect, the first security service is an encryption service, the first service request message includes a plaintext message, and the first feedback message is a ciphertext message.

With reference to the third aspect, in some implementations of the third aspect, the first security service is a decryption service, the first service request message includes a ciphertext message, and the first feedback message is a plaintext message.

According to a fourth aspect, a communication method is provided. The method may be performed by a first module. The first module may be a security functional unit, a module, or a device, or may be a chip or a circuit in a security functional unit, module, or a device, or may be a logical module or software that can implement all or some security functions. This is not limited in this application.

The method includes: A transceiver unit is configured to send a first request message, where the first request message is used to request a first module to execute a first security service, the first security service is used to perform at least one of the following operations: calling a security algorithm, obtaining a security parameter, or requesting a second security service from a second module, the requester includes a first node or a second node, the first module is a module serving the first node, and the second module is a module serving the second node.

The transceiver unit is further configured to receive a first feedback message from the first module, where the first feedback message is used to feed back an execution result of the first security service.

With reference to the fourth aspect, in a possible implementation, the requester is the first node, and the first request message includes an identifier of the second node.

According to a fifth aspect, a communication apparatus is provided. The apparatus includes a processor. The processor is coupled to a memory, and may be configured to execute instructions in the memory, to implement the method according to either of the first aspect and the second aspect and any one of the possible implementations of the first aspect and the second aspect. Optionally, the apparatus further includes the memory. The memory and the processor may be separately deployed, or may be deployed in a centralized manner. Optionally, the apparatus further includes a communication interface, and the processor is coupled to the communication interface. In an implementation, the communication interface may be a transceiver or an input/output interface.

When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. The input signal received by using the input circuit may be received and input by using, but not limited to, a receiver, the signal output by using the output circuit may be output to, but not limited to, a transmitter and transmitted by using the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a communication apparatus is provided. The apparatus includes a logic circuit and an input/output interface, and the logic circuit is configured to: be coupled to the input/output interface, and perform transmission of data through the input/output interface, to perform the method according to either of the first aspect and the second aspect and any one of the possible implementations of the first aspect and the second aspect.

According to a seventh aspect, a communication system is provided. The system includes the first module according to any possible implementation of the first aspect or the second aspect.

According to an eighth aspect, a computer-readable storage medium is provided. The computer-readable storage medium stores a computer program (which may also be referred to as code or instructions). When the computer program is run on a computer, the computer is enabled to perform the method according to either of the first aspect and the second aspect and any possible implementation of the first aspect and the second aspect.

According to a ninth aspect, a computer program product is provided. The computer program product includes a computer program (which may also be referred to as code or instructions). When the computer program is run, a computer is enabled to perform the method according to either of the first aspect and the second aspect and any possible implementation of the first aspect and the second aspect.

According to a tenth aspect, a circuit system is provided, including a memory and a processor. The memory is configured to store a computer program. The processor is configured to invoke the computer program from the memory and run the computer program, so that a communication device on which the circuit system is installed performs the method according to any possible implementation of the first aspect or the second aspect.

The circuit system may include an input circuit or interface configured to send information or data, and an output circuit or interface configured to receive information or data.

According to an eleventh aspect, a circuit system is provided, and is configured to perform the method according to any possible implementation of the first aspect or the second aspect.

For beneficial effect brought by the third aspect to the eleventh aspect, refer to descriptions of beneficial effect in the first aspect and the second aspect. Details are not described herein.

### BRIEF DESCRIPTION OF DRAWINGS

FIG. 1 is a diagram of a communication system 100 applicable to an embodiment of this application;
FIG. 2 is a diagram of a network architecture 200 applicable to a communication system in this application;
FIG. 3(a) and FIG. 3(b) are a diagram of a security authentication method applicable to this application;
FIG. 4 is a diagram of an authorization method applicable to this application;
FIG. 5 is a diagram of a network architecture 300 applicable to a communication system in this application;
FIG. 6 is a block diagram of a communication method applicable to a specific embodiment of this application;
FIG. 7 is a flowchart of an authentication service applicable to a specific embodiment of this application;
FIG. 8 is a flowchart of a trusted attestation service applicable to a specific embodiment of this application;
FIG. 9(a) and FIG. 9(b) are a flowchart of an authorization service applicable to a specific embodiment of this application;
FIG. 10 is a flowchart of an encryption/decryption service applicable to a specific embodiment of this application;
FIG. 11 is a flowchart of a blockchain data upload or download service applicable to a specific embodiment of this application;
FIG. 12 is a block diagram of a communication apparatus applicable to an embodiment of this application;
FIG. 13 is a diagram of an architecture of a communication apparatus applicable to an embodiment of this application; and
FIG. 14 is a diagram of an architecture of a communication apparatus applicable to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (Global System Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, an LTE time division duplex (time division duplex, TDD) system, an universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system or new radio (new radio, NR) system, a wireless local area network (wireless local area network, WLAN) system, and a wireless fidelity (wireless fidelity, Wi-Fi) system. The 5G mobile communication system may be non-standalone (non-standalone, NSA) networking or standalone (standalone, SA) networking.

The technical solutions provided in this application may be further applied to machine type communication (machine type communication, MTC), a long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, X can stand for anything). For example, the V2X may include vehicle to vehicle (vehicle to vehicle, V2V) communication, vehicle to infrastructure (vehicle to infrastructure, V2I) communication, vehicle to pedestrian communication (vehicle to pedestrian, V2P), or vehicle to network (vehicle to network, V2N) communication.

The technical solutions provided in this application may be further applied to a future communication system, for example, a 6th generation (6th Generation, 6G) mobile communication system. This is not limited in this application.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

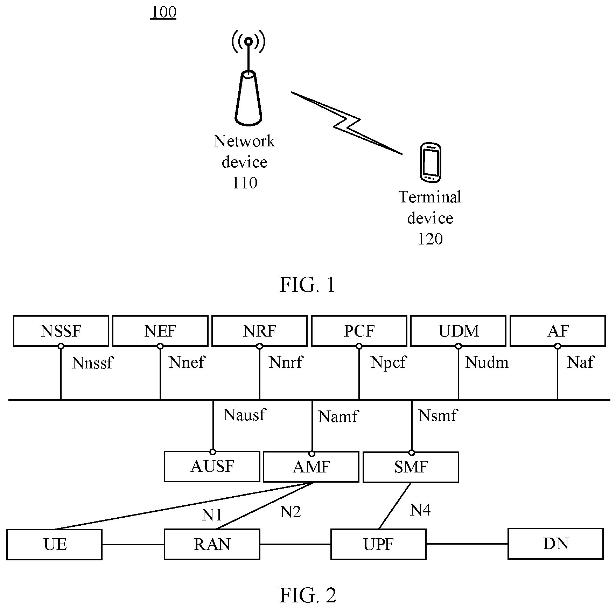

FIG. 1 is a diagram of a communication system 100 applicable to an embodiment of this application. As shown in FIG. 1, the communication system 100 may include at least one network device, for example, a network device 110 shown in FIG. 1, and the communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. The plurality of antennas configured for each communication device in the communication system may include at least one sending antenna configured to send a signal and at least one receiving antenna configured to receive a signal. Therefore, the communication devices in the communication system, for example, the network device 110 and the terminal device 120, may communicate with each other by using a multi-antenna technology.

It should be understood that FIG. 1 is merely a simplified diagram used as an example for ease of understanding, and the communication system may further include another network device or another terminal device that is not shown in FIG. 1.

It should be further understood that the communication system 100 shown in FIG. 1 is merely an example of an application scenario of embodiments of this application, and this application may be further applicable to communication between any two devices, for example, communication between terminal devices or communication between network devices.

FIG. 2 is a diagram of a network architecture 200 applicable to a communication system in this application.

As shown in FIG. 2, the network architecture of the communication system includes but is not limited to the following network elements.
1. User equipment (UE): User equipment in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The user equipment may be a device that provides voice/data connectivity for a user, for example, a handheld device or a vehicle-mounted device that has a wireless connection function. Currently, examples of some terminals are as follows: a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, user equipment in a future 5G network, user equipment in a future evolved public land mobile network (public land mobile network, PLMN), or the like. This is not limited in embodiments of this application.

By way of example, and not limitation, in embodiments of this application, the user equipment may alternatively be a wearable device. The wearable device may also be referred to as a wearable intelligent device, and is a generic term for wearable devices such as glasses, gloves, watches, clothes, and shoes that are developed by using wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, in embodiments of this application, the user equipment may alternatively be user equipment in an internet of things (internet of things, IoT) system. IoT is an important part of future information technology development. A main technical feature of IoT is to connect things to a network by using a communication technology, to implement a smart network for human-machine interconnection and thing-thing interconnection.

In embodiments of this application, an IoT technology can implement massive connections, in-depth coverage, and terminal power saving by using, for example, a narrowband (narrowband) NB technology. For example, an NB may include one resource block (resource block, RB), that is, a bandwidth of the NB is only 180 KB. To implement massive access, terminals are required to be discrete in access. According to a communication method in embodiments of this application, a congestion problem that occurs when massive terminals access a network through the NB in the IoT technology can be effectively resolved.

In addition, an access device in embodiments of this application may be a device configured to communicate with user equipment, and the access device may also be referred to as an access network device or a radio access network device. For example, the access device may be an evolved NodeB (evolved NodeB, eNB or eNodeB) in an LTE system, a radio controller in a cloud radio access network (cloud radio access network, CRAN) scenario, a relay station, an access point, a vehicle-mounted device, a wearable device, an access device in a future 5G network, an access device in a future evolved PLMN network, an access point (access point, AP) in a WLAN, or a gNB in a new radio (new radio, NR) system. This is not limited in embodiments of this application.

In addition, in embodiments of this application, the user equipment may further communicate with user equipment in another communication system, for example, inter-device communication. For example, the user equipment may further transmit (for example, send and/or receive) a time synchronization packet with the user equipment in the another communication system.

2. Access device (AN/RAN): An access device in embodiments of this application may be a device configured to communicate with user equipment, and the access device may also be referred to as an access network device or a radio access network device. For example, the access device may be an evolved NodeB (evolved NodeB, eNB or eNodeB) in an LTE system, a radio controller in a cloud radio access network (cloud radio access network, CRAN) scenario, a relay station, an access point, a vehicle-mounted device, a wearable device, an access device in a future 5G network, an access device in a future evolved PLMN network, an access point (access point, AP) in a WLAN, or a gNB in a new radio (new radio, NR) system. This is not limited in embodiments of this application.

In addition, in embodiments of this application, the access device is a device in a RAN. In other words, the access device is a RAN node that connects the user equipment to a wireless network. For example, by way of example, and not limitation, the access device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB or a home NodeB, HNB), a baseband unit (baseband unit, BBU), or a wireless fidelity (wireless fidelity, Wi-Fi) access point (access point, AP). In a network structure, a network device may include a central unit (central unit, CU) node, a distributed unit (distributed unit, DU) node, a RAN device including a CU node and a DU node, or a RAN device including a control plane CU node (CU-CP node), a user plane CU node (CU-UP node), and a DU node.

The access device may serve a cell. User equipment communicates with the access device on a transmission resource (for example, a frequency domain resource, or in other words, a frequency spectrum resource) used for the cell. The cell may be a cell corresponding to the access device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

In addition, a plurality of cells may simultaneously operate in a same frequency band on a carrier in the LTE system or the 5G system. In some special scenarios, it may also be considered that a concept of the carrier is equivalent to that of a cell. For example, in a carrier aggregation (carrier aggregation, CA) scenario, when a secondary component carrier is configured for UE, both a carrier index of the secondary component carrier and a cell identifier (cell identifier, Cell ID) of a secondary cell that operates on the secondary component carrier are included. In this case, it may be considered that a concept of a carrier is equivalent to that of a cell. For example, accessing a carrier by the user equipment is equivalent to accessing a cell by the user equipment.

The communication system in this application may be further applicable to a vehicle to everything (vehicle to everything, V2X) technology. To be specific, the user equipment in this application may alternatively be a vehicle, for example, an intelligent vehicle or an autonomous vehicle.

Herein, "X" in V2X represents different communication targets, and V2X may include but is not limited to vehicle to vehicle (vehicle to vehicle, V2V), vehicle to infrastructure (vehicle to infrastructure, V2I), vehicle to network (vehicle to network, V2N), and vehicle to pedestrian (vehicle to pedestrian, V2P).

In the V2X, the access device may configure a "zone (zone)" for the UE. The zone may also be referred to as a geographical area. After the zone configuration, the world is divided into a plurality of zones, and the zones are defined by reference points, lengths, and widths. When determining a zone identifier (identifier, ID), the UE uses a zone length, a zone width, a quantity of zones above the length, a quantity of zones above the width, and a zone reference point to perform a remainder operation. The foregoing information may be configured by the access device.

A V2X service may be provided in two manners: a proximity-based services communication (Proximity-based Services Communication 5, PC5) interface manner and a Uu interface-based manner. The PC5 interface is an interface defined based on a sidelink (sidelink). Through such an interface, communication devices (for example, vehicles) may directly communicate with each other. The PC5 interface may be used out of coverage (out of coverage, OOC) and in coverage (in coverage, IC), but only an authorized communication device can use the PC5 interface for transmission.

3. An access and mobility management function (Access and Mobility Management Function, AMF) network element is mainly used for mobility management, access management, and the like, and may be configured to implement functions other than session management in functions of a mobility management entity (mobility management entity, MME) in an LTE system, for example, functions such as lawful interception and access authorization/authentication. When providing a service for a session in user equipment, the AMF network element provides a control plane storage resource for the session to store a session identifier, an SMF network element identifier associated with the session identifier, and the like. In embodiments of this application, the access and mobility management function network element may be configured to implement a function of an access and mobility management network element.

4. A session management function (Session Management Function, SMF) network element is mainly used for session management, allocation and management of an internet protocol (internet protocol, IP) address of user equipment, selection and management endpoints of interfaces of a user plane function, a policy control function, and a charging function, downlink data notification, and the like. In embodiments of this application, the session management function network element may be configured to implement a function of a session management network element.

5. A policy control (Policy Control Function, PCF) network element is a unified policy framework used to guide network behavior, and provides policy rule information, a traffic-based charging control function, and the like for control plane function network elements (such as AMF and SMF network elements).

6. A unified data management (unified data management, UDM) network element is mainly responsible for processing subscription data of UE, including storage and management of a user identifier, user subscription data, authentication data, and the like.

7. A user plane function (User Plane Function, UPF) network element may be used to perform packet routing and forwarding, quality of service (quality of service, QoS) processing of user plane data, or the like. User data may be accessed to a data network (data network, DN) through the network element, or may be received from the data network and transmitted to user equipment through an access network device. A transmission resource and a scheduling function that are used by the UPF network element to provide a service for user equipment are managed and controlled by an SMF network element. In embodiments of this application, the user plane function network element may be configured to implement a function of a user plane network element.

8. A network exposure function (Network Exposure Function, NEF) network element is used to securely expose, to the outside, a service, a capability, and the like that are provided by a 3GPP network function, and mainly supports secure interaction between a 3GPP network and a third-party application.

9. An application function (Application Function, AF) network element is used to perform application-affected data routing, access a network exposure function network element, interact with a policy framework to perform policy control, or the like, for example, some services affecting a data routing decision-making function, a policy control function, or providing a third-party for a network side.

10. A network slice selection function (Network Slice Selection Function, NSSF) network element is mainly responsible for network slice selection, and determines a network slice instance that UE is allowed to access based on slice selection assistance information of the UE, subscription information, and the like.

11. An authentication server function (Authentication Server Function, AUSF) network element supports 3GPP and non-3GPP access authentication.

12. A network repository function (Network Repository Function, NRF) network element supports registration and discovery of a network function.

13. A unified data repository (Unified Data Repository, UDR) network element stores and obtains subscription data used by a UDM and a PCF.

In the network architecture, an N2 interface is a reference point between the RAN and an AMF entity, and is configured to send a NAS (Non-Access Stratum, non-access stratum) message and the like; an N3 interface is a reference point between the RAN and the UPF network element, and is configured to transmit user plane data and the like; and an N4 interface is a reference point between the SMF network element and the UPF network element, and is configured to transmit information such as tunnel identification information of an N3 connection, data buffering indication information, and a downlink data notification message.

It should be understood that the UE, the (R)AN, the UPF, and the DN in FIG. 2 are generally referred to as data plane network functions and entities. Data traffic of a user may be transmitted by using a PDU session established between the UE and the DN, and the transmission passes through two network function entities: the (R)AN and the UPF. Other parts are referred to as control plane network functions and entities, and are mainly responsible for functions such as authentication and authorization, registration management, session management, mobility management, and policy control, to implement reliable and stable transmission of user plane traffic.

It should be understood that the foregoing network architecture applied to embodiments of this application is merely an example of a network architecture described from a perspective of a conventional point-to-point architecture and a service-based architecture, a network architecture applicable to embodiments of this application is not limited thereto, and any network architecture that can implement functions of the foregoing network elements is applicable to embodiments of this application.

It should be understood that names of the interfaces between the network elements in FIG. 2 are merely examples, and the interfaces may have other names in specific implementation. This is not specifically limited in this application. In addition, names of messages (or signaling) transmitted between the foregoing network elements are merely examples, and do not constitute any limitation on functions of the messages.

It should be noted that the foregoing "network element" may also be referred to as an entity, a device, an apparatus, a module, or the like, and there is no particular limitation in this application herein. In addition, in this application, for ease of understanding and description, descriptions of the "network element" are omitted in some descriptions. For example, an SMF network element is referred to as an SMF for short. In this case, the "SMF" should be understood as an SMF network element or an SMF entity. Descriptions of same or similar cases are omitted below.

It may be understood that the entities or the functions may be network elements in a hardware device, may be software functions running on dedicated hardware, or may be virtualized functions instantiated on a platform (for example, a cloud platform).

It should be understood that the foregoing network architecture applied to embodiments of this application is used as an example to describe a service-based architecture. A core network sets dedicated network elements for different types of communication services. In other words, a communication-related function may be provided in a form of a service. In embodiments of this application, communication-related functions are not limited to the function network elements listed in FIG. 2. This is not limited in embodiments of this application.

It should be noted that security of a conventional 5G network is distributed in communication nodes as a function. For example, the AUSF supports authentication for 3GPP access and non-3GPP access; the SEAF provides an authentication function in a serving network, and may support an initial authentication procedure based on a subscription concealed identifier (subscription concealed identifier, SUCI); the AMF supports encryption and integrity protection of NAS signaling; the NRF supports a bidirectional authentication function with another NF, and supports an authorization function for the another NF; the NEF supports a bidirectional authentication function with the AF, and supports encryption, integrity protection, and replay protection of messages between the NEF and the NF through a transport layer security (transport layer security, TLS) protocol; a base station supports encryption, integrity protection, and replay protection of messages between the base station and the UE through a packet data convergence protocol (packet data convergence protocol, PDCP); a CU and a DU support bidirectional authentication, encryption, integrity protection, and replay protection; and the UE supports a bidirectional authentication function with a core network, supports encryption, integrity protection, and replay protection of NAS signaling between the UE and the core network, supports encryption, integrity protection, and replay protection of radio resource control (radio resource control, RRC) messages between the UE and a base station through the PDCP protocol, supports a privacy protection function of converting a subscription permanent identifier (subscription permanent identifier, SUPI) into a 5G globally unique temporary UE identifier (5G globally unique temporary identifier, 5G-GUTI), supports a security function visible to upper-layer applications, and allows users to configure a security function.

For example, the following describes in detail a process in which the communication node implements the security authentication function according to an existing protocol.

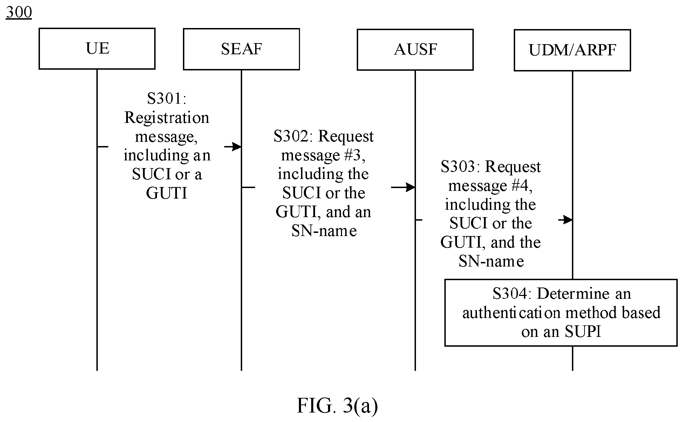

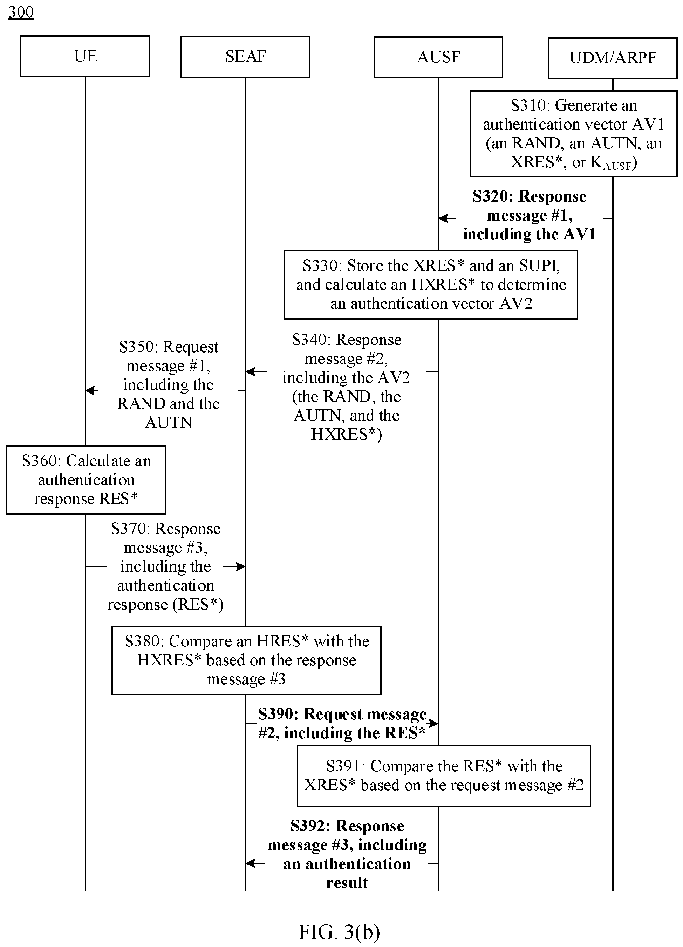

FIG. 3(a) and FIG. 3(b) are a schematic flowchart of a security authentication method. Specific steps are as follows.

Steps S301 to S304 in FIG. 3(a) show a procedure of triggering security authentication, and steps S310 to S392 in FIG. 3(b) show an authentication procedure of security authentication.

S301: UE sends a registration message to an SEAF.

Based on a policy of the SEAF, the SEAF may initiate authentication to the UE in any process of establishing a signaling connection to the UE. The UE should use an SUCI or a 5G-GUTI in a registration application.

S302: The SEAF sends a request message #3 to an AUSF.

It should be understood that when the SEAF expects to initiate authentication, the SEAF calls an authentication service via the request message #3.

For example, the request message #3 may be an authentication request Nausf_UEAuthentication_Authenticate Request message.

The request message #3 includes the SUCI or an SUPI.

S303: The AUSF sends a request message #4 to a UDM/an ARPF.

The AUSF compares a serving network name in the request message #3 with an expected serving network name, to check whether the SEAF has permission to use an authentication request.

The AUSF stores the received serving network name. If a serving network is not authorized to use the serving network name, the AUSF should return an indication indicating that the serving network is not authorized in an authentication Nausf_UEAuthentication_Authenticate response.

S304: The UDM/ARPF determines an authentication method.

After receiving an authentication trigger Nudm_UEAuthentication_Get request, if the SUCI is received, the UDM calls a subscription identifier de-concealing function (subscription identifier de-concealing function, SIDF). Before the UDM processes the request, the SIDF should de-hide the SUCI to obtain the SUPI. The UDM/ARPF may determine an authentication manner based on the SUPI.

A specific authentication procedure is as follows:

S310: The UDM/ARPF generates an authentication vector #1.

It should be understood that, after receiving an authentication trigger request message, the UDM/ARPF may correspondingly generate the authentication vector #1 (denoted as an AV 1). The authentication vector may be understood as a security parameter set.

The authentication vector #1 includes a random number RAND, an authentication token (authentication token, AUTN), and an expected response (expected response, XRES*).

Specifically, the UDM/ARPF may calculate the XRES*.

The authentication trigger request message may be a Nudm_Authenticate_Get Request message.

S320: The UDM/ARPF sends a response message #1 to the AUSF.

Specifically, the response message #1 is used to respond to the authentication trigger request message.

The response message #1 includes the authentication vector #1.

S330: The AUSF stores the XRES*, and calculates a hash expected response (Hash expected response, HXRES*) to determine an authentication vector #2.

Specifically, the AUSF stores the XRES*, calculates an HXRES* based on the stored XRES*, replaces the XRES* in the authentication vector #1 with the HXRES*, and denotes an obtained new authentication vector as the authentication vector #2.

S340: The AUSF sends a response message #2 to the SEAF, where the response message #2 includes the authentication vector #2 (the RAND, the AUTN, and the HXRES*).

Specifically, the response message #2 is used to respond to the authentication trigger request message.

The response message #2 includes the authentication vector #2, and the authentication vector #2 includes the parameters RAND, AUTN, and HXRES*.

S350: The SEAF sends a request message #1 to the UE.

Specifically, the request message #1 includes the RAND and the AUTN.

The request message #1 may be an authentication request message.

S360: The UE calculates an authentication response RES*.

Specifically, the UE calculates the authentication response RES* based on the request message #1.

It should be noted that the UE may verify a network by verifying the AUTN.

S370: The UE sends a response message #3 to the SEAF.

The response message #3 includes the authentication response (RES*).

The response message #3 may be a NAS message.

S380: The SEAF compares a hash response (Hash response, HRES*) with the HXRES* based on the response message #3.

Specifically, the SEAF may determine the RES* from the response message #3, calculate the HRES* based on the RES*, and compare the HXRES* obtained from the AUSF in step S340 with the HRES*.

Specifically, if the HXRES* and the HRES*are consistent, from a perspective of the serving network, the SEAF should consider that the authentication succeeds. If the RES* has never been received by the SEAF, the SEAF considers that the authentication fails, and indicates the failure to the AUSF.

S390: The SEAF sends a request message #2 to the AUSF.

The request message #2 includes the RES*.

Specifically, the request message #2 is used to request an authentication service from the AUSF.

S391: The AUSF compares the RES* with the XRES* based on the request message #2.

Specifically, the AUSF should compare the received RES* with the stored XRES*. If the RES* and the XRES* are equal, from a perspective of a home network, the AUSF considers that the authentication succeeds. The AUSF should notify the UDM of an authentication result.

It should be understood that when the AUSF receives the request message #2 including the RES* as an authentication acknowledgment, the AUSF may verify whether the authentication vector #2 has expired. If the authentication vector #2 has expired, from a perspective of the home network, the AUSF may consider that the authentication fails. After the authentication succeeds, the AUSF stores KAUSF based on a policy.

For example, the request message #2 may be a UE identity authentication request Nausf_UEAuthentication_Authenticate Request message.

S392: The AUSF sends a response message #3 to the UE, where the response message #3 includes the authentication result.

According to the foregoing steps, it may be learned in the conventional technology that, when an AMF and the UE perform authentication, a security parameter operation needs to be performed on an AMF side, and when a request is sent to the UE, a security parameter of the operation is included, and is used for the UE to calculate an authentication response. In this process, the security parameter is forwarded or processed between network elements on a core network side, and there is a security problem. In addition, for a UE side, authentication calculation needs to be performed, and a processing process of the UE is complex.

For example, the following describes in detail a process in which the communication node performs the authorization function according to an existing protocol.

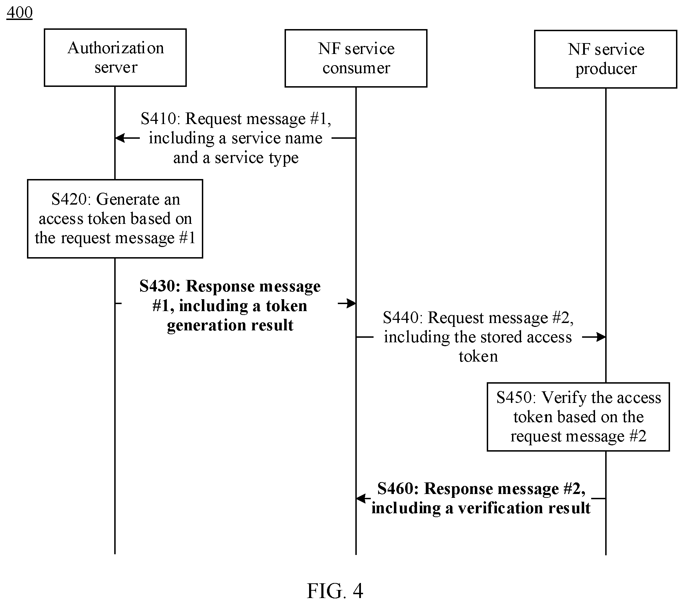

FIG. 4 is a schematic flowchart of an authorization method. Specific steps are as follows.

Step S410: An NF service consumer sends a request message #1 to an authorization server.

The request message #1 is used to request an authorization service from the authorization server.

Specifically, the NF service consumer may request an access token from an NRF of a same public land mobile network (public land mobile network, PLMN).

The request message #1 includes a requested service name and service type, and an NF instance ID of the NF service consumer.

The request message #1 may be an access token trigger Nnrf_AccessToken_Get message.

Step S420: The authorization server generates the access token based on the request message #1.

Specifically, the authorization server may verify whether the NF service consumer is authorized. If the NF service consumer is an authorized NF service consumer, the authorization server generates the access token.

Specifically, the authorization server may verify whether an input parameter (for example, an NF type) in the request message #1 matches a corresponding parameter in a public key certificate or an NF profile of the NF service consumer, to verify whether the NF service consumer is authorized to access the requested service. If the NF service consumer is authorized, the NRF (that is, the authorization server) generates the access token. The NRF should perform a digital signature on the generated access token based on a shared key or a private key. If the NF service consumer is not authorized, the NRF should not issue the access token to the NF service consumer.

Step S430: The authorization server sends a response message #1 to the NF service consumer.

The response message #1 is used to feed back an authorization result to the NF service consumer.

If the authorization succeeds, the response message #1 includes the generated access token.

If the authorization fails, the response message #1 includes an authorization failure response.

The response message #1 may be an access token trigger Nnrf_AccessToken_Get response message.

Step S440: The authorization server sends a request message #2 to an NF service producer.

The request message #2 is used to request a token verification service from the authorization server.

The request message #2 includes the stored access token (generated by the authorization server).

Step S450: The NF service producer verifies the access token based on the request message #2.

The NF service producer verifies the signature based on the public key of the NRF or verifies integrity of the access token based on a shared private check MAC value. If the integrity check succeeds, verification of the access token by the NF service producer succeeds.

Step S460: The NF service producer sends a response message #2 to the NF service consumer.

The response message #2 is used to feed back a verification result to the NF service consumer.

If the verification succeeds, the NF service producer executes the requested service, and feeds back a verification success result to the NF service consumer via the response message #2.

If the verification fails, the NF service producer feeds back a verification failure to the NF service consumer via the response message #2.

According to the foregoing steps, it may be learned that in the conventional technology, the access token generated by the authorization server for the service consumer needs to be directly transferred between the service consumer and the authorization server, and the access token also needs to be transferred between the service consumer and the service producer when the service consumer requests to verify the access token from the service producer, it is difficult to ensure security when the access token is transferred between different NFs.

In conclusion, a security function is strongly coupled with a communication function, which imposes an obvious limitation on development of the security function. For example, an operation of setting a security function is complex and requires a heavy workload. This does not comply with a development trend of a future network. For another example, a security function is set on each NF, and modification on a security protocol usually involves a plurality of NFs in a procedure. Consequently, deployment is complex, and maintenance costs are high. For still another example, when network vulnerabilities are exploited, and attacks are about to occur or have occurred, it is challenging to quickly upgrade security capabilities because security capabilities embedded in different network functions are different from each other. As a communication service has an increasingly high security requirement, it is clear that existing security function deployment cannot meet a communication requirement, resulting in a communication security problem.

Secure transmission is a basic guarantee of communication. An existing security function is closely coupled to a communication function. In embodiments of this application, an independent security function can be deployed, so that an independent security service can be enabled in a communication node. This improves communication security performance.

Specific embodiments are used below to describe in detail the technical solutions of this application. The following several specific embodiments may be combined with each other, and a same or similar concept or process may not be described repeatedly in some embodiments.

An embodiment of this application provides a security function that may be deployed on a network side, a terminal side, or an application side. In the following embodiments, the security function is described by using a security functional module as an example. In the following specific embodiments, a first module and a second module may be security functional modules serving different communication nodes. The first module may also be represented by a security module #1, and the second module may be represented by a security module #2.

In this application, deployment of the security functional module may be represented as an actual physical function, or may be represented as a virtual logical function. In other words, the security functional module may be separately deployed as an independent physical functional module with another network, terminal, or application function, it can also be integrated with other networks, terminals, or application functions as a logical function. To distinguish between security functional modules deployed on different communication nodes, a security module #1, a security module #2, and the like may be used for distinguishing.

The following describes a deployment architecture of the security functional module.

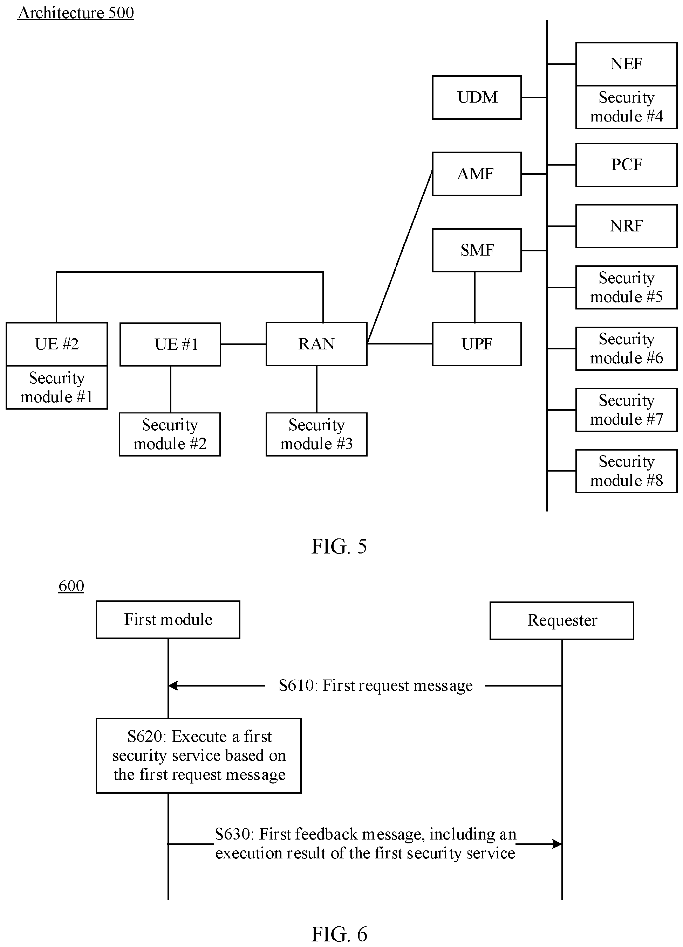

FIG. 5 is a diagram of a network architecture 500 applicable to a communication system in this application.

An existing network architecture is used as an example, and a security functional module may be deployed in an existing communication node. For example, the security functional module may be deployed on a terminal side. As shown in FIG. 5, a security module #1 may be integrated with a function of UE #2, that is, the security module #1 may be deployed inside the UE #2. For example: The security module #1 may communicate with a function of a UICC inside the UE #2 through an interface. A security module #2 and UE #1 may be separately deployed, that is, the security module #2 may be deployed outside the UE #1 as a functional entity. A security function may be deployed outside an access network device as a functional entity, or may be deployed inside an access network device as a logical function. For example, when the access network device may include a CU node and a DU node, the security functional module may be deployed only on a CU, or may be deployed on both a CU and a DU. The security functional module may be deployed on a core network device, or may be deployed outside a core network device in a form of a functional entity. For example, a security module #4 in FIG. 5 is deployed on a NEF as a logical function, a security module #5, a security module #6, a security module #7, and a security module #8 are independently deployed on a bus in a network function manner of the core network.

It should be understood that the foregoing deployment forms are merely examples for description. Regardless of whether the security functional module is on a network side, a terminal side, or an application side, a unified external interface may be used to form a basis for multi-party negotiation and trusted communication.

It should be noted that the security module #1, the security module #2, the security module #3, and the like are all security functional modules. Based on requirements for different communication nodes, security modules deployed on different nodes may implement different security functions. The following uses the first module as an example to describe a service procedure of the security functional module provided in this application. The first module may serve any communication node or a third-party request node, and an example in which any communication node or the third-party request node is a requester is used for description.

FIG. 6 is a diagram of a communication method 600 applicable to this application. The method 600 shown in FIG. 6 is applicable to the systems or the architectures shown in FIG. 1 to FIG. 3(b). The method 600 includes the following steps.

S610: A requester sends a first request message to a first module.

In this application, the requester includes one of a first node, a second node, or a second module. The first node may be a communication node served by the first module, the second node is a communication node served by the second module, and the second module and the first module are security functional modules deployed in different communication nodes in a communication system.

It should be understood that the first node or the second node may be any communication node or application in the communication system, for example, may be a terminal device, an access network device, a core network element, or a third-party application. This is not limited in embodiments of this application.

There may be a plurality of manners of triggering the first module to execute a security service, and there are two of the manners in which the requester sends the first request message or a first notification message to the first module.

In a possible implementation, the requester sends the first request message to the first module, where the first request message is used to request one or more trusted services from the first module.

It should be understood that the first request message may include one trusted service identifier or a trusted service list of a plurality of trusted services. The trusted service list of the plurality of trusted services is used to apply for the plurality of trusted services at a time.

In a possible implementation, the first request message includes an identifier of a destination node of the trusted service.

The identifier of the destination node of the trusted service indicates a service object of the trusted service. For example, in an authentication service, the identifier of the destination node of the trusted service indicates a to-be-authenticated terminal device of the authentication service.

It should be understood that, in the conventional technology, when a communication node requests a security function, a preprocessing result of the communication node is required, for example, calculation of a security algorithm or obtaining of a security parameter.

In this application, when the communication node requests the security service, the identifier of the destination node of the trusted service may be carried in the request message. The first module may determine, based on the identifier of the destination node of the trusted service, a trusted policy corresponding to the identifier, and further determine a specific security algorithm and a used security parameter based on the trusted policy. The trusted policy specifies the specific security algorithm and the security parameter that need to be called.

For example, when the requester is the first node, the first request message includes an identifier of the second node, indicating a destination node of a trusted service, for example, indicate a to-be-authenticated party in an authentication service, or indicate an authenticator in a trusted attestation service.

In another possible implementation, the first request message includes a security parameter.

The security parameter is a security parameter input when the first module executes a specific algorithm.

For example, when the requester is the second module, the first request message includes the security parameter, and the security parameter is used by the first module to execute a specific security algorithm.

In another possible implementation, the first request message may not include the identifier of the second node or the security parameter.

For example, when the requester is the second node, the first module may obtain the security parameter that needs to be input into the security algorithm. For example, an input parameter used when the first module executes a specific security algorithm is preset or may be directly obtained by the first module. For example, in a trusted attestation service, a blockchain timestamp may be used as a challenge value in the trusted attestation service, and the first module inputs the challenge value as a parameter of the security algorithm.

It should be understood that, when the requester is the second node, a data packet header of the first request message includes an identity indication of the second node. Therefore, the first request message may not include the identifier of the second node.

Specifically, the trusted service may be an existing trusted service, or may be a trusted service that may be newly added in future communication, or may be a trusted service required by any communication node or the requester. The following Table 1 lists some trusted services. The trusted services listed in Table 1 are merely examples for description. Table 2 is a corresponding Chinese translation. A specific trusted service may include one or more of the trusted services listed in Table 1. This is not limited in this application.

**Table 1**

| Service Name | Service Operations |
|---|---|
| Attestation | Verify that the NF has the permission to attest and respond with evidence |
| Verification | Check the attestation evidence from the attester and verify that it is correct, respond to the NF/UE/RAN/Gear with attestation result |
| RV Provide | Verify that the NF has the permission to be a verifier and respond with a reference value |
| RV Update | Verify the identity of provider, update the received reference value and respond with the updating result |
| ZK Verify | Call the requested algorithms to verify the NF have the secret |
| Data Masking | Call the requested algorithms to mask user data |
| Smart Contract | Execute the specific smart contract and respond with output parameters or the result of execution |
| Consensus | Initiate a consensus over specific event and respond with the result of consensus |
| Upload | Upload the information on blockchain and response with the result |
| Download | Download the information from blockchain and response with the result |
| Authentication | Authenticate UE and respond to RAN, or authenticate one NF and respond to another NF |
| Encryption/Decryption | Encrypt the received whole/part of message and respond to the consumer |
| Integration | Integrate the received whole/part of message and respond to the consumer |
| Static Authorization | Verify and decide whether to authorize the NF based on local authorization policy |
| Token Verify | Verify the token received from service consumer and decide whether to authorize the NF based on the result of verification |
| Token Gen | Generate access tokens and send to Gear of requesting NF |
| Token Get | Get access tokens from gears of NFs that request for services from this NF |
| ... | ... |

**Table 2**

| Service name | Service operations |
|---|---|
| Attestation | Verify whether the NF has permission to attest and provide evidence |
| Verification | Check the attestation evidence from an attester and verify that it is correct, respond to the NF/UE/RAN/Gear with a verification result |
| Reference value | Verify that the NF has permission to be a verifier and respond with a |
| provide | reference value |
| Reference value update | Verify the identity of the provider, update the received reference value, and respond with the updating result |
| ZK verify | Call a zero-knowledge proof algorithm for verification |
| Data masking | Call requested algorithms to mask user data |
| Smart contract | Execute a specific smart contract and respond with output parameters or the result of execution |
| Consensus | Initiate a consensus over a specific event and respond with a result of the consensus |
| Upload | Upload information to the blockchain and response with the result |
| Download | Download information from the blockchain and respond with the result |
| Authentication | Authenticate an identifier of a destination node and responds to the authentication result |
| Encryption/Decryption | Encrypt the received whole/part of message and respond to the consumer |
| Integrity protection | Call the integrity protection algorithm to protect some or all messages and feed back the integrity protection result |
| Static authorization | Verify and decide whether authorization is required based on the local authorization policy |
| Token verify | Verify the token received from the service consumer and decide whether to authorize the NF based on the result of verification |
| Token protection | Generate access tokens and sends the access tokens to the security module of the requesting NF |
| Token obtaining | Obtain access tokens from security modules of NFs that request for services for this NF |
| ... | ... |

In another possible implementation, the requester sends the first notification message to the first module, where the first notification message is used to notify the first module of a first event, and the first event may be a preset trigger event, and may be specifically a status notification of the requester. For example, when the requester is UE, the first event may be that the UE accesses an access network device.

In this case, the trusted service list may be preset in the first module. For example, the trusted service list is preset by an operator, or a default list is specified in a standard protocol, or a list is generated in a trusted policy negotiation phase. This is not limited in embodiments of this application.

In addition to the foregoing two manners, the first module may further automatically trigger execution of the trusted service based on a preset periodicity. For example, the first module is a security module deployed on a core network side. In this case, the first module may periodically perform trusted attestation on the access network device or the terminal device, or may periodically perform authentication on the terminal device. For another example, the first module may periodically upload log data to a blockchain based on a periodicity. Alternatively, the first module may trigger the trusted service based on a preset timer. This is not limited in embodiments of this application.

It may be understood that step S610 is an optional step.

It should be noted that, before the first module receives the first request message or the first notification message, a trusted negotiation procedure is completed between the first module and the second module. Specifically, the trusted policy may be determined in the trusted negotiation procedure.

In a possible understanding, the trusted negotiation procedure is a process in which two security functional modules participating in negotiation generate the trusted policy through negotiation based on a security requirement of a node served by the security functional module, a security capability that can be provided by the security functional module, and the like. This process is performed before a trusted service procedure. In a possible implementation, for the trusted negotiation procedure, refer to the 3GPP standard protocol TS33.501.

The trusted policy specifies a security algorithm and a security parameter that need to be specifically called. For example, an authentication and key agreement (authentication and key agreement, AKA) is used for authentication between the first node and the second node, a trusted computing platform module (trusted platform module, TPM) is used for trusted attestation, and an advanced encryption standard (advanced encryption standard, AES) algorithm is used for encryption/decryption. After the trusted policy is generated, the trusted policy corresponds to the identifier, and is stored in the first module and the second module. For example, the first module stores the identifier of the second node, and the trusted policy of the first node and the second node; and the second module stores an identifier of the first node, and the trusted policy of the first node and the second node.

After receiving a trusted service request message, the first module locates, based on the identifier that is of the second node and that is carried in the message, the trusted policy previously obtained through negotiation with the second module, and determines a specific security algorithm to be called and a used security parameter.

S620: The first module executes a first security service based on the first request message.

The first module performs, based on the first request message, at least one of the following operations: calling a security algorithm, obtaining a security parameter, or requesting a second security service from the second module.

Specifically, the first module determines, based on the trusted policy, the to-be-called security algorithm or the obtained security parameter.

In a possible implementation, the first request message includes the identifier of the second node. The first module may determine, based on the identifier of the second node, a trusted policy corresponding to the identifier, and further determine a specific security algorithm and a used security parameter based on the trusted policy.

In a possible implementation, the first request message includes the security parameter, and the first module directly inputs the security parameter into the security algorithm for calculation.

In a possible implementation, the first request message does not include the identifier of the second node or the security parameter. In this case, the first module may obtain the security parameter or preset the input security parameter.

It should be understood that, if the trusted policy does not include the requested trusted service, the first module may generate a security service rejection message, to reject a trusted service request.

S630: The first module sends a first feedback message to the requester.

The first module feeds back an execution result of the first security service to the requester via the first feedback message.

It may be understood that the first feedback message may alternatively be the trusted service rejection message.

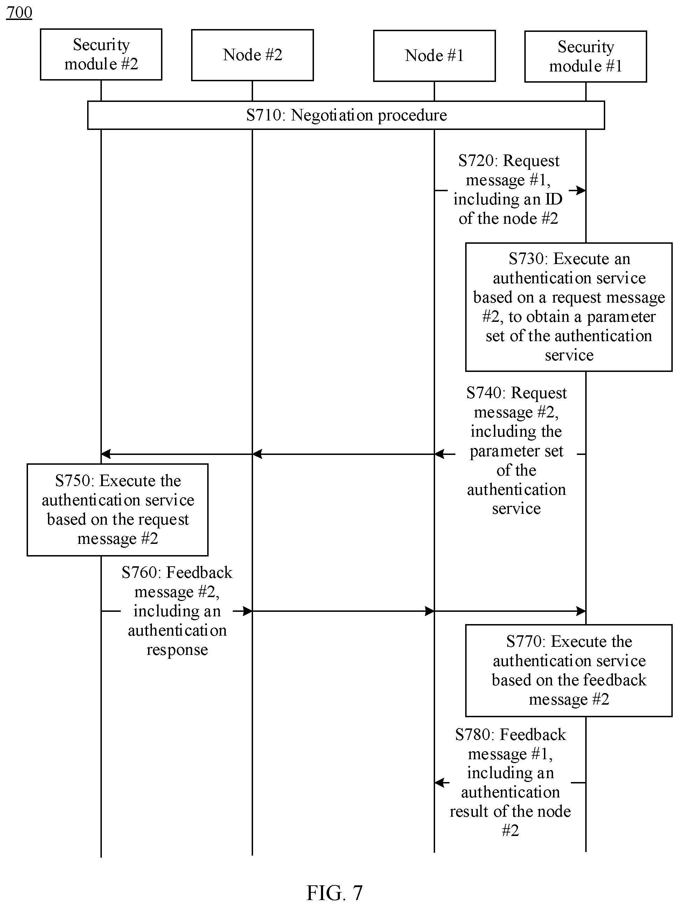

FIG. 7 is a flowchart of an authentication service applicable to a communication method in this application. An authentication service procedure shown in FIG. 7 may be one of the first security services in the method shown in FIG. 6. In other words, the authentication service procedure may be implemented according to the method 600. Specifically, the method 700 includes the following steps.

In this embodiment, a node #1 and a node #2 execute an authentication procedure. For example, the node #1 is an AMF, and the node #2 is UE. As a core network security functional module, a security module #1 may be deployed on a core network side to provide a security service for a network element on the core network side. As a security functional module of the UE, a security module #2 may be deployed on a UE side to provide a security service for the UE. For a specific deployment manner, refer to FIG. 5. Details are not described herein in this application. The security module #1 may be an example of a first module, and the security module #2 may be an example of a second module.

S710: The security module #2 and the security module #1 perform a negotiation procedure.

Specifically, a trusted policy may be determined according to the negotiation procedure, and the trusted policy is used to determine an authentication algorithm.

S720: The node #1 sends a request message #1 to the security module #1.

The request message #1 is used to request an authentication service from the security module #1.

The request message #1 includes an identifier of the node #2.

For example, the request message #1 may be an authentication service request message.

S730: The security module #1 executes the authentication service based on the request message #1, to obtain a parameter set of the authentication service.

The security module #1 calls the authentication algorithm based on the request message #1 to obtain the parameter set (a first parameter set) of the authentication service. The parameter set of the authentication service includes an authentication vector (a second parameter set) and an authentication response XRES.

Specifically, the security module #1 determines a corresponding trusted policy based on the identifier of the node #2, determines a corresponding authentication parameter based on the policy, and inputs the authentication algorithm to obtain the parameter set of the authentication service through calculation.

For example, the authentication vector may include a RAND and an AUTN.

S740: The security module #1 sends a request message #2 to the security module #2 through the node #1 and the node #2.

The request message #2 is used to request an authentication service from the security module #2.

The request message #2 includes the second parameter set (the authentication vector).

It may be understood that the second parameter set is from the first parameter set, in other words, the second parameter set is a part of the first parameter set.

For example, the request message #2 may be an authentication service request message of the node #2.

It should be understood that when the security module #1 sends the request message #2 to the security module #2 through the node #1 and the node #2, another network element may be further included between the node #1 and the node #2, and this is not limited to directly sending the request message #2 through the node #1 and the node #2. This is not limited in embodiments of this application.

For example, the node #1 is an AMF, and the node #2 is UE. In this case, after the security module #1 sends the request message #2 to the AMF, the AMF needs to forward the request message #2 to an access network device, and the access network device forwards the request message #2 to the UE.

It should be noted that, when the node #1 and the node #2 are different NFs in a core network, or are an access network device and a core network element, or are different access network devices, the request message #2 may be directly sent by the security module #1 to the security module #2.

In other words, if authentication services between the node #1 and the node #2 are different NFs in the core network, or are between an access network device and a core network element, or are between different access network devices, information transfer between the security module # 1 and the security module # 2 does not need to be forwarded between the core network element, the access network device, and the UE, but may be directly exchanged by the security modules. Subsequent similar steps such as S760 are similar to this. Details are not described.

S750: The security module #2 executes the authentication service based on the request message #2.

The security module #2 calls the authentication algorithm based on the parameter set of the authentication service in the request message #2 to perform authentication on the node #1, to obtain an authentication response. The authentication response is used to feed back an authentication service result of the security module #2 to the security module #1.

For example, the security module #2 calls the authentication algorithm to verify the AUTN, so that the UE authenticates a network.

For example, the security module #2 executes authentication on the network to generate an authentication response RES. The authentication response RES is sent to the core network, and is used by the core network to perform authentication on the UE.

S760: The security module #2 sends a feedback message #2 to the security module #1 through the node #1 and the node #2.

The feedback message #2 is used to feed back authentication performed by the node #2 on the node #1 to the security module #1.

The feedback message #2 includes the authentication response.

For example, the feedback message #2 may be an authentication service response message of the node #2.

For example, the feedback message #2 includes the authentication response RES, and the authentication response RES is used by the core network to perform authentication on the UE.

It should be understood that, similar to the case in which the security module #1 sends the request message #2 to the security module #2 through the node #1 and the node #2, when the security module #2 sends the feedback message #2 to the security module #1 through the node #1 and the node #2, forwarding of another communication node may also be included. This is not limited in embodiments of this application.

S770: The security module #1 executes the authentication service based on the feedback message #2.

The security module #1 performs authentication on the authentication response based on the feedback message #2.

For example, the security module #1 implements authentication on the UE by comparing the XRES and the RES, to obtain an authentication result.

S780: The security module #1 sends a feedback message #1 to the node #1, where the feedback message #1 includes an authentication result of the node #2.

The security module #1 sends the authentication result of the node #2 to the node #1 via the feedback message #1, to implement two-way authentication.

For example, the feedback message #1 may be an authentication service response message.

According to the foregoing technical solution, a communication node that requires the authentication service may perform the authentication procedure by using a deployed security functional module, and the authentication vector and the authentication response may be exchanged only between security functional modules of communication nodes. This further improves security. In this way, an independent security service is enabled in the communication node, and communication security performance is improved.

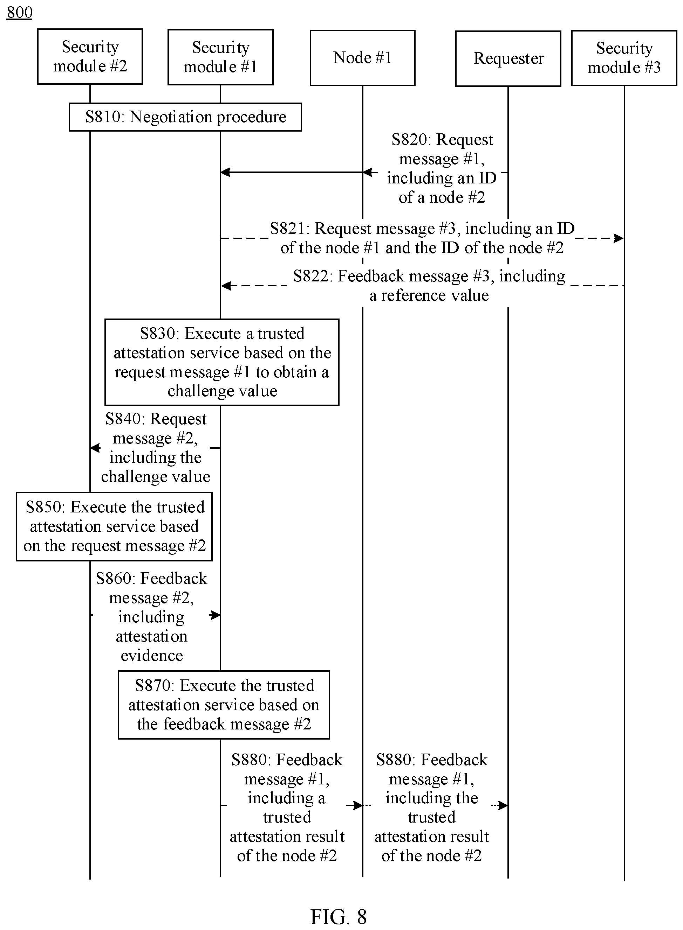

FIG. 8 is a flowchart of a trusted attestation service applicable to a communication method in this application. A trusted attestation service procedure shown in FIG. 8 may be one of the first security services in the method shown in FIG. 6. In other words, the trusted attestation service procedure may be implemented according to the method 600. Specifically, the method 800 includes the following steps.

In this embodiment, an example in which a node #1 initiates trusted attestation to a node #2 is used for description. For example, the node #1 is a verifier verifier, the node #2 is an attester attester, a node #3 is a provider provider, a requester may be a third party 3rd party, and the verifier, the provider, the 3rd party, and the attester may be UEs or RANs, or may be NFs. A security module #1 is used as a security functional module of the node #1, and a security module #2 is used as a security functional module of the node #2. The security module #1 may be an example of a first module, and the security module #2 may be an example of a second module.

S810: The security module #2 and the security module #1 perform a negotiation procedure.

Specifically, a trusted policy may be determined according to the negotiation procedure, and the trusted policy is used to determine a trusted attestation algorithm.

S820: The node #1 sends a request message #1 to the security module #1.

The request message #1 is used to request a trusted attestation service from the security module #1.

The request message #1 includes an identifier of the node #2.

For example, the request message #1 may be a trusted attestation service request message.

In a possible implementation, the requester may first initiate a trusted attestation service request to the node #1.

In a possible implementation, the node #1 or the node #2 may directly trigger a trusted attestation procedure.

For example, UE includes a verification service request in a registration request message, to require a core network to perform trusted attestation on the UE in an access process of the UE, or a core network includes a verification service request in a registration response message.

In this application, the provider and the verifier may be a same node. In this case, the security module #1 stores a reference value. When the provider and the verifier are different nodes, the security module #1 needs to request the reference value from a security module #3. Details about step S821 and step S822 are as follows:

S821: The security module #1 sends a request message #3 to the security module #3.

The request message #3 includes an ID of the node #1 and the ID of the node #2.

The request message #3 is used to request the reference value from the security module #3.

For example, the request message #3 may be a reference value obtaining service request message.

S822: The security module #3 sends a feedback message #3 to the security module #1, where the feedback message #3 includes the reference value.

Specifically, the security module #3 obtains the reference value based on the request message #3, and feeds back the reference value to the security module #1.

For example, the feedback message #3 may be a reference value obtaining service response message.

S830: The security module #1 executes the trusted attestation service based on the request message #1 to generate a challenge value.

The security module #1 calls the trusted attestation algorithm based on the request message #1 to generate the challenge value.

Specifically, the security module #1 determines a corresponding trusted policy based on the identifier of the node #2, determines a corresponding trusted attestation parameter based on the trusted policy, and inputs the trusted attestation parameter into the trusted attestation algorithm to generate the challenge value through calculation.

S840: The security module #1 sends a request message #2 to the security module #2.

The request message #2 is used to request a trusted attestation service from the security module #2.

The request message #2 includes the challenge value.

For example, the request message #2 may be an attestation evidence obtaining service request message.

It should be understood that, if the trusted attestation service between the node #1 and the node #2 is trusted attestation service between access network devices, or trusted attestation service between different network elements in a core network, or trusted attestation service between an access network device and a core network element, the security module #1 may directly send the request message #2 to the security module #2.

If the trusted attestation between the node #1 and the node #2 is between the core network element and the UE, the security module #1 sends the request message #2 to the security module #2 through the node #1 and the node #2. Specifically, for example, the node #1 is an AMF, and the node #2 is UE. In this case, after the security module #1 sends the request message #2 to the AMF, the AMF needs to forward the request message #2 to an access network device, the access network device forwards the request message #2 to the UE, and then the UE forwards the request message #2 to the security module #2.

In other words, if the trusted attestation between the node #1 and the node #2 is between the core network element and the UE, information transfer between the security module #1 and the security module #2 needs to be forwarded between the core network element, the access network device, and the UE. Subsequent similar steps such as S860 are similar to this. Details are not described.

S850: The security module #2 executes the trusted attestation service based on the request message #2.

The security module #2 generates attestation evidence based on the challenge value in the request message #2 and the called trusted attestation algorithm. The attestation evidence is used by the security module #1 to verify whether the security module #2 is trusted.

The attestation evidence may be understood as trusted attestation evidence for a device, or may be trusted attestation evidence for communication protocol stacks, namely, all protocol stacks from a physical layer to an application layer (a highest layer) by default. A layer at which an end point of the attestation evidence is located may be specified based on an Attestation Req message, an end point of the attestation evidence may be configured by an operator through a management plane, or may be determined through negotiation in a negotiation phase.

S860: The security module #2 sends a feedback message #2 to the security module #1.

The feedback message #2 is used to feed back a trusted attestation result of the node #2 for the node #1 to the security module #1.

The feedback message #2 includes the attestation evidence.

Optionally, the feedback message #2 may further include the ID of the node #2.

For example, the feedback message #2 may be an attestation evidence obtaining service response message.

S870: The security module #1 executes the trusted attestation service based on the feedback message #2.

The security module #1 verifies the attestation evidence based on the feedback message #2 and the reference value, to generate a trusted attestation result.

S880: The security module #1 sends a feedback message #1 to the node #1, where the feedback message #1 includes the trusted attestation result of the node #2.

The security module #1 sends the trusted attestation result of the node #2 to the node #1 via the feedback message #1, to implement trusted attestation verification.

For example, the feedback message #1 may be a trusted attestation service response message.

It may be understood that the feedback message may be further sent to the requester, to feed back the trusted attestation result of the node #2 to the requester.

According to the foregoing technical solution, a communication node that requires the trusted attestation service may perform the trusted attestation procedure by using a deployed security functional module, and the attestation evidence, the reference value, the challenge value, and the like may be exchanged only between security functional modules of communication nodes. This further improves security. In this way, an independent security service is enabled in the communication node, and communication security performance is improved.

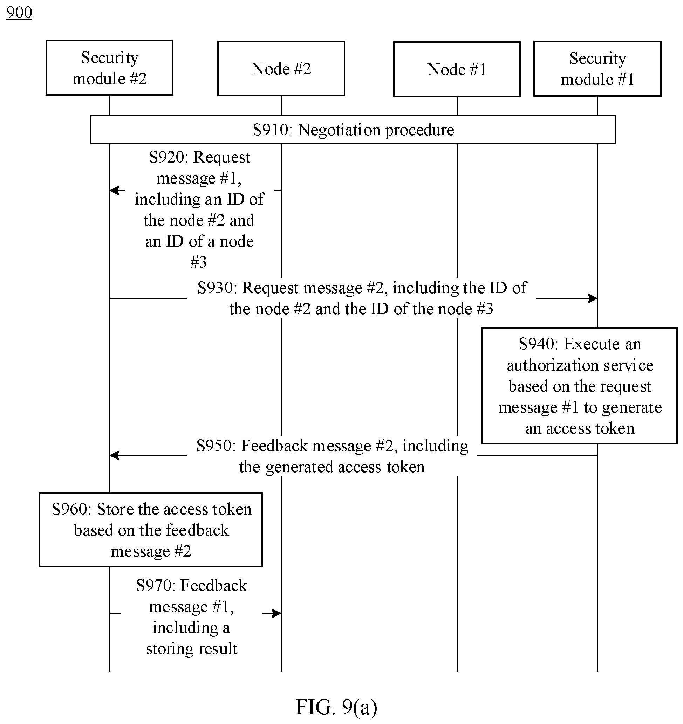

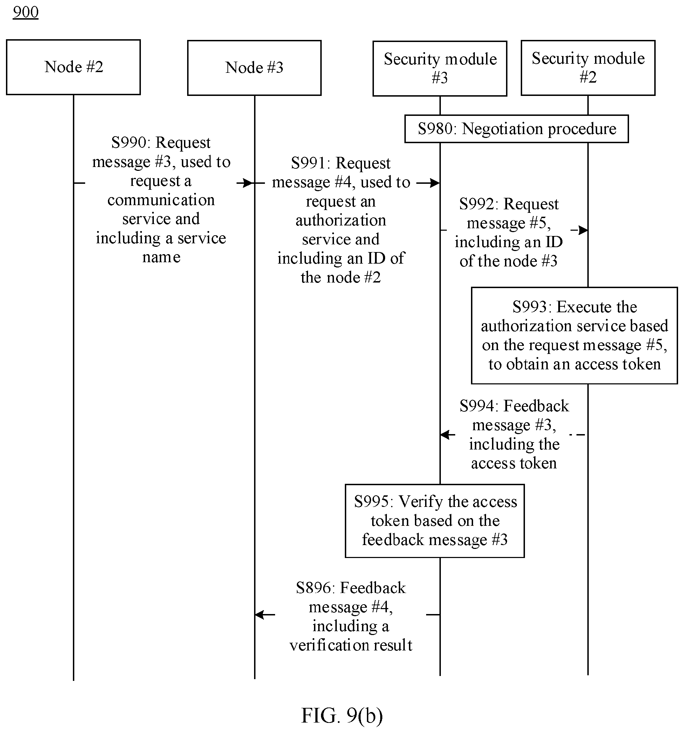

FIG. 9(a) and FIG. 9(b) are a flowchart of an authorization service applicable to a communication service in this application. An authorization service procedure shown in FIG. 9(a) and FIG. 9(b) may be one of the first security services in the method shown in FIG. 6. In other words, the authorization service procedure may be implemented according to the method 600. Specifically, the method 900 includes the following steps.

In this embodiment, an example of the authorization service procedure is as follows: A node #1 initiates a token token application service to a node #2 (steps shown in FIG. 9(a)), a node #3 initiates a token obtaining service to the node #2, and the node #3 verifies a token service (steps shown in FIG. 9(b)). For example, the node #1 is an AuthServer (authorization server), the node #2 is an NF service consumer (NF service consumer), the node #3 is an NF service producer (NF service producer), and the AuthServer, the consumer, and the producer may be NFs. A security module #1 is used as a security functional module of the node #1, a security module #2 is used as a security functional module of the node #2, and a security module #3 is used as a security functional module of the node #3. The security module #1 may be an example of a first module, and the security module #2 may be an example of a second module.

Steps S910 to S970 are a procedure of obtaining and storing an access token.

S910: The security module #1 and the security module #2 execute a negotiation procedure.

Specifically, a trusted policy may be determined according to the negotiation procedure, and the trusted policy is used to determine an authorization algorithm.

S920: The node #2 sends a request message #1 to the security module #2.

The request message #1 is used to request an authorization service from the security module #1.

The request message #1 includes an identifier of the node #3 and a service name, and the service name is a name of a service requested by the node #2 from the node #3.

For example, the request message #1 may be an access token request message.

S930: The security module #2 sends a request message #2 to the security module #1.

The request message #2 is used to request the authorization service from the security module #1.

The request message #2 includes the identifier of the node #3 and the service name.

For example, the request message #2 may be an access token generation request message.

It should be understood that, if the authorization service between the node #1 and the node #2 is an authorization service between access network devices, or an authorization service between different network elements in a core network, or an authorization service between an access network device and a core network element, the security module #2 may directly send the request message #2 to the security module #1.

If the authorization service between the node #1 and the node #2 is between a core network element and UE, the security module #2 sends the request message #2 to the security module #1 through the node #2 and the node #1. Specifically, for example, the node #1 is an AMF, and the node #2 is UE. In this case, after the security module #2 sends the request message #2 to the UE, the UE needs to forward the request message #2 to an access network device, the access network device forwards the request message #2 to the AMF, and then the AMF forwards the request message #2 to the security module #1.

In other words, if the authorization service between the node #1 and the node #2 is between the core network element and the UE, information transfer between the security module #1 and the security module #2 needs to be forwarded between the core network element, the access network device, and the UE. Subsequent similar steps such as S950 are similar to this. Details are not described.

S940: The security module #1 executes the authorization service based on the request message #1 to generate the access token.

The security module #1 calls the authorization algorithm based on the request message #1 to generate the access token.

Specifically, the security module #1 determines a corresponding trusted policy based on the identifier of the node #3, determines a corresponding authorization service security parameter based on the trusted policy, and inputs the corresponding authorization service security parameter into the authorization algorithm to generate the access token.

S950: The security module #1 sends a feedback message #2 to the security module #2.

The feedback message #2 is used to feed back a generated access token result to the node #2.

The feedback message #2 includes the generated access token.

For example, the feedback message #2 may be an access token generation response message.

S960: The security module #2 stores the access token based on the feedback message #2.

S970: The security module #2 sends a feedback message #1 to the node #2.

The feedback message #1 is used to feed back a storing result to the node #2.

The feedback message #1 includes the service name, the ID of the node #3, and an access token obtaining result.

For example, the feedback message #1 may be an access token response message.

The following steps S980 to S995 are a verification service procedure of the access token.

S980: The security module #3 and the security module #2 execute a negotiation procedure.

Specifically, a trusted policy may be determined according to the negotiation procedure, and the trusted policy is used to determine an authorization algorithm.

S990: The node #2 sends a request message #3 to the node #3.

Specifically, the request message #3 is used to request a communication service from the node #3, and the request message #3 includes a name of the requested communication service. Further, the node #3 determines, by verifying the access token of the node #2, that the node #3 can provide the communication service for the node #2. This step may be understood as a trigger condition of the following trusted service.

S991: The node #2 sends a request message #4 to the security module #3.

The request message #4 is used to request an authorization service from the security module #3.

It may be understood that the node #3 initiates an access token verification service request to the security module #3, that is, the service requested in the request message #4.

The request message #4 includes an identifier of the node #2.

For example, the request message #4 may be an access token verification request message.

S992: The security module #3 sends a request message #5 to the security module #2.

The request message #5 is used to request the authorization service from the security module #2.

The request message #5 includes the identifier of the node #3.

For example, the request message #5 may be an access token obtaining request message.

S993: The security module #2 executes the authorization service based on the request message #5 to obtain an access token.

The security module #2 calls the authorization algorithm based on the request message #5 to obtain the access token.

S994: The security module #2 sends the feedback message #5 to the security module #3.

The feedback message #5 is used to feed back an obtained access token result to the security module #3.

The feedback message #5 includes the obtained access token.

For example, the feedback message #5 may be an access token obtaining response message.

S995: The security module #3 verifies the access token based on the feedback message #5.

The security module #3 calls the authorization algorithm to verify the access token.

S996: The security module #3 sends a feedback message #4 to the node #3.

The feedback message #4 is used to feed back a verification result to the node #3.

The feedback message #4 indicates whether verification on the access token succeeds.

For example, the feedback message #4 may be an access token verification response message.

If the verification result is that the verification succeeds, the node #3 subsequently provides, for the node #2, the communication service requested in the request message #3.

According to the foregoing technical solution, a communication node that requires a network authorization service may execute an authorization service procedure by using a deployed security functional module, and the access token may be exchanged only between security functional modules of communication nodes. This further improves security. In this way, an independent security service is enabled in the communication node, and communication security performance is improved.

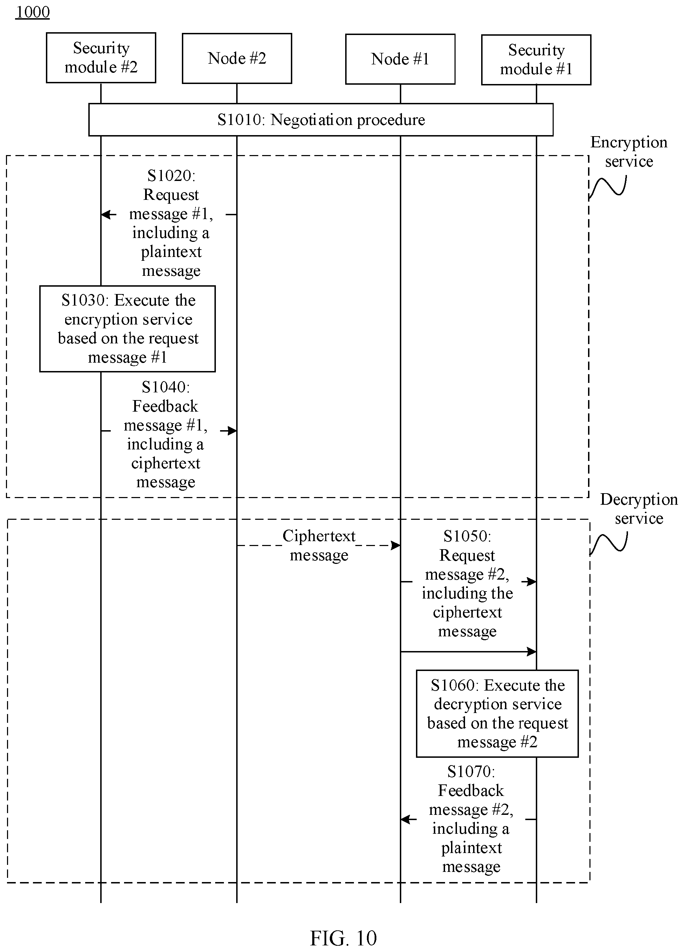

FIG. 10 is a flowchart of an encryption/decryption service applicable to a communication method in this application. An encryption/decryption service procedure shown in FIG. 10 may be one of the first security services in the method shown in FIG. 6. In other words, the encryption/decryption service procedure may be implemented according to the method 600. Specifically, the method 1000 includes the following steps.

In this embodiment, a node #1 and a node #2 execute the encryption/decryption service procedure. For example, the node #1 is an access network device, and the node #2 is UE. A security module #1 is used as a security functional module of the access network device, and a security module #2 is used as a security functional module of the UE. The security module #1 may be an example of a first module, and the security module #2 may be an example of a second module.

S1010: The security module #2 and the security module #1 perform a negotiation procedure.

Specifically, a trusted policy may be determined according to the negotiation procedure, and the trusted policy is used to determine an encryption algorithm or a decryption algorithm.

S1020: The node #2 sends a request message #1 to the security module #2.

The request message #1 is used to request the encryption service from the security module #2.

The request message #1 includes a to-be-encrypted plaintext message.

For example, the request message #1 may be an encryption service request message.

S1030: The security module #2 executes the encryption service based on the request message #1, to obtain a ciphertext message.

Specifically, the security module #2 calls the encryption algorithm based on the request message #1, to obtain the ciphertext message.

Specifically, the security module #2 determines an identifier of the node #2 based on the request message #1, determines a corresponding trusted policy based on the identifier, determines an encryption key based on the trusted policy, and inputs the encryption key and the plaintext message into the encryption algorithm to generate the ciphertext message.

The request message #1 may include the identifier of the node #2, or a message header of the request message #1 includes an identity indication of the node #2. This is not limited in this application.

S1040: The security module #2 sends a feedback message #1 to the node #2.

The feedback message #1 is used to feed back an encryption result to the node #2, that is, feed back a ciphertext message.

The feedback message #1 includes the ciphertext message.

For example, the feedback message #1 may be an encryption service response message.

The foregoing steps S1020 to S1040 are a process in which the UE requests the security functional module deployed in the UE for encryption.

The following describes a process in which the access network device performs decryption by using the security functional module deployed in the access network device.

S1050: The node #1 sends a request message #2 to the security module #1.

The request message #2 is used to request the decryption service from the security module #1.

The request message #2 includes a to-be-decrypted ciphertext message.

For example, the request message #2 may be a decryption service request message.

It should be understood that the ciphertext message in the request message #2 may be obtained from the node #2, or may be a ciphertext message that needs to be decrypted and that is received from any communication node. This is not limited in embodiments of this application.

S1060: The security module #1 performs a decryption service based on the request message #2, to obtain a plaintext message.

Specifically, the security module #1 calls the decryption algorithm based on the request message #2, to obtain the plaintext message.

Specifically, the security module #1 determines an identifier of the node #1 based on the request message #2, determines a corresponding trusted policy based on the identifier, determines a decryption key based on the trusted policy, and inputs the decryption key and the ciphertext message into the decryption algorithm to generate the plaintext message.

The request message #2 may include the identifier of the node #1, or a message header of the request message #2 includes an identity indication of the node #1. This is not limited in this application.

S1070: The security module #1 sends a feedback message #2 to the node #1.

The feedback message #2 is used to feed back a decryption result to the node #1, that is, feed back a plaintext message.

The feedback message #2 includes the plaintext message.

For example, the feedback message #2 may be a decryption service response message.

It should be understood that the foregoing encryption procedure and decryption procedure are merely examples for description. An encryption/decryption service procedure may be implemented between any communication nodes by using a deployed security functional module. In addition, the encryption service and the decryption service are independently performed based on a service requirement. This is not limited in embodiments of this application.

In a possible implementation, the security functional module is integrated with the communication node. For example, the security functional module is deployed together with the access network device in a form of a security assembly, an encryption card, a decryption card, or the like.

In a possible implementation, the access network device may be divided into a CU unit and a DU unit. In this case, the security functional module may be deployed on the CU unit, or may be deployed on the DU unit, or may be deployed on the CU unit and the DU unit.

If the security functional module is deployed on both the CU unit and the DU unit, the encryption/decryption service procedure is the same as the procedure in FIG. 10.

If the security functional module is deployed only on the CU unit, the encryption process is initiated by the CU unit, and encryption is implemented on the corresponding security functional module, to obtain the ciphertext message. The decryption process is directly performed by the DU unit.

According to the foregoing technical solution, a communication node that requires an encryption/decryption service may perform the encryption/decryption procedure by using the deployed security functional module. This improves security. In this way, an independent security service is enabled in the communication node, and communication security performance is improved.

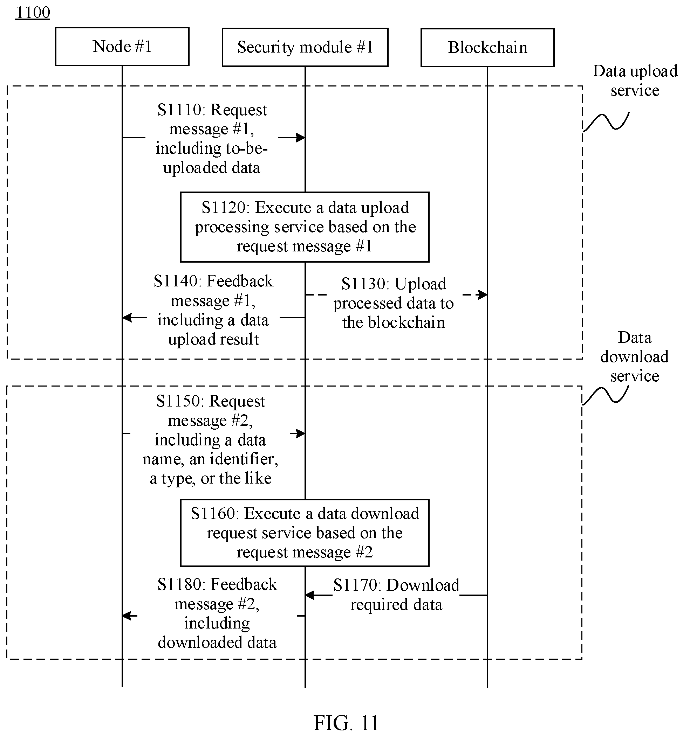

FIG. 11 is a flowchart of a blockchain data upload or download service applicable to this application. A data upload service or download service procedure shown in FIG. 11 may be one of the first security services in the method shown in FIG. 6. In other words, a blockchain data upload or download service procedure may be implemented according to the method 600. Specifically, the method 1100 includes the following steps.

In this embodiment, an NF that needs to upload data to a blockchain or needs to download data from a blockchain may request a data upload service or a data download service from a security functional module in a core network. For example, a node #1 is an NF network element, and a security module #1 is used as a security functional module of a core network device.

S1110: The node #1 sends a request message #1 to the security module #1.

The request message #1 is used to request the security module #1 to upload data to the blockchain.

The request message #1 includes to-be-uploaded data.

For example, the request message #1 may be a blockchain data upload request message.

S1120: The security module #1 executes a blockchain service based on the request message #1.

Specifically, the security module #1 verifies, based on the request message #1, whether the node #1 has permission to upload data to the blockchain.

The security module #1 processes the data by calling an encryption and integrity protection algorithm based on the request message #1, to obtain processed data.

S1130: The security module #1 uploads the processed data to the blockchain.

S1140: The security module #1 sends a feedback message #1 to the node #1.

The feedback message #1 is used to feed back a data upload result to the node #1.

For example, the feedback message #1 may be a blockchain data upload response message.

The foregoing steps S1110 to S1140 are a service process in which the NF network element requests the security functional module deployed in the core network to upload the data to the blockchain.

The following describes a service process in which the NF network element requests, by using the security functional module deployed in the core network, to download data from the blockchain.

S1150: The node #1 sends a request message #2 to the security module #1.

The request message #2 is used to request, from the security module #1, a service for downloading data from the blockchain.

The request message #2 includes indication information of the data to be downloaded from the blockchain.

For example, the indication information of the data may be a data name, a data type, a data identifier, or the like.

For example, the request message #2 may be a blockchain data download request message.

S1160: The security module #1 executes a blockchain service based on the request message #2.

Specifically, the security module #1 verifies, based on the request message #2, whether the node #1 has permission to download data from the blockchain.

Further, the security module #1 downloads corresponding data from the blockchain based on the request message #2.

It may be understood that, if further processing such as decryption needs to be performed on the data, a security algorithm such as decryption or integrity protection may be called to process the data.

S1170: The security module #1 receives, from the blockchain, the data that is requested to be downloaded.

S1180: The security module #1 sends a feedback message #2 to the node #1.

The feedback message #1 is used to feed back a data download result to the node #1.

The feedback message includes downloaded data or indicates that the data fails to be downloaded or is successfully downloaded.

For example, the feedback message #2 may be a data response message downloaded from the blockchain.

According to the foregoing technical solution, a communication node that requires a blockchain data upload or download service may execute a data upload or download service procedure by using a deployed security functional module, and the security functional module independently performs data processing processes such as permission authentication and data format conversion. This improves security. In this way, an independent security service is enabled in the communication node, and communication security performance is improved.

Embodiments described in this specification may be independent solutions, or may be combined based on internal logic. All of these solutions fall within the protection scope of this application.

It should be understood that the steps in the foregoing embodiments are merely possible implementations, and this is not limited in embodiments of this application.

It may be understood that, in the foregoing method embodiments, a method and an operation implemented by the terminal device may further be implemented by a component (for example, a chip or a circuit) that may be used in the terminal device, and a method and an operation implemented by the network device (for example, a cell A or a network device to which the cell A belongs) may further be implemented by a component (for example, a chip or a circuit) that may be used in the network device.

The foregoing mainly describes the solutions provided in embodiments of this application from perspectives of interactions. It may be understood that, to implement the foregoing functions, each of the network elements such as a transmitter device or a receiver device includes a corresponding hardware structure and/or a corresponding software module for performing each of the functions. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, functional modules may be obtained through division based on functions, or two or more functions may be integrated into one processing unit. The integrated module may be implemented in a form of hardware, or may be implemented in a form of a software functional module. It should be noted that, in embodiments of this application, module division is an example, and is merely a logical function division. During actual implementation, another division manner may be used. Descriptions are provided below by using an example in which each functional module is obtained through division corresponding to each function.

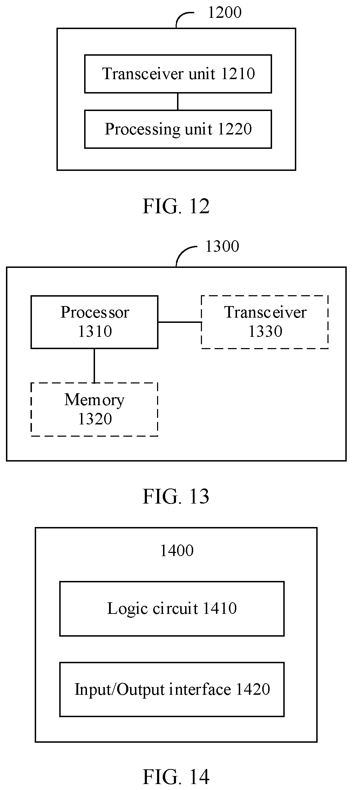

The method provided in embodiments of this application is described above in detail with reference to FIG. 5 to FIG. 11. Apparatuses provided in embodiments of this application are described below in detail with reference to FIG. 12 and FIG. 13. It should be understood that descriptions of apparatus embodiments correspond to the descriptions of the method embodiments. Therefore, for content that is not described in detail, refer to the method embodiments. For brevity, details are not described herein.

FIG. 12 is a block diagram of a communication apparatus according to an embodiment of this application. The communication apparatus 1200 shown in FIG. 12 includes a transceiver unit 1210 and a processing unit 1220. The transceiver unit 1210 may perform external communication, and the processing unit 1220 is configured to process data. The transceiver unit 1210 may also be referred to as a communication interface or a communication unit.

Optionally, the transceiver unit 1210 may include a sending unit and a receiving unit. The sending unit is configured to perform a sending operation in the foregoing method embodiments. The receiving unit is configured to perform a receiving operation in the foregoing method embodiments.

It should be noted that the communication apparatus 1200 may include a sending unit, but does not include a receiving unit. Alternatively, the communication apparatus 1200 may include the receiving unit, but does not include the sending unit. This may depend on whether the foregoing solution performed by the communication apparatus 1200 includes a sending action and a receiving action.

Optionally, the communication apparatus 1200 may further include a storage unit. The storage unit may be configured to store instructions and/or data. The processing unit 1220 may read the instructions and/or the data in the storage unit.

In a design, the communication apparatus 1200 may be configured to perform an action performed by the first module in the foregoing method embodiments.

Optionally, the communication apparatus 1200 may perform an action performed by the first module in the foregoing method embodiments. The first module may be a security functional unit, a module, or a device, or may be a chip or a circuit in a security functional unit, a module, or a device, or may be a logical module or software that can implement all or some functions of a security functional unit, a module, or a device. This is not limited in this application.

Optionally, the communication apparatus 1200 may be the first module, the transceiver unit 1210 is configured to perform a receiving or sending operation of the first module in the foregoing method embodiments, and the processing unit 1220 is configured to perform an internal processing operation of the first module in the foregoing method embodiments.

Optionally, the communication apparatus 1200 may be a device including the first module. Alternatively, the communication apparatus 1200 may be a component configured in the first module, for example, a chip in the first module. In this case, the transceiver unit 1210 may be an interface circuit, a pin, or the like. Specifically, the interface circuit may include an input circuit and an output circuit, and the processing unit 1220 may include a processing circuit.

In a possible implementation, the processing unit 1220 is configured to execute a first security service based on a first request message received from a requester, where the first security service is used to perform at least one of the following operations: calling a security algorithm, obtaining a security parameter, or requesting a second security service from a second module, the first request message is used to request one or more trusted services, the requester includes a first node or a second node, the first module is a module serving the first node, and the second module is a module serving the second node; and the transceiver unit 1210 is configured to send a first feedback message to the requester, where the first feedback message is used to feed back an execution result of the first security service to the requester.

In a possible implementation, the requester is the first node, and the first request message includes an identifier of the second node.

In a possible implementation, the processing unit 1220 is specifically configured to execute the authentication service based on the first request message, to obtain a parameter set of a first authentication service; the transceiver unit 1210 is specifically configured to send a second request message to the second module through the first node and the second node, where the second request message includes a parameter set of a second authentication service, and the parameter set of the second authentication service is from the parameter set of the second authentication service; the transceiver unit 1210 is further configured to receive a second feedback message from the second module through the first node and the second node, where the second feedback message includes an authentication response, and the authentication response is used to feed back an authentication service result of the second module to the first module; and the transceiver unit 1210 is further configured to: execute the authentication service based on the authentication response, and send the first feedback message to the first node, where the first feedback message is used to feed back an authentication result of the second node to the first node.

In a possible implementation, the processing unit 1220 is specifically configured to execute the trusted attestation service based on the first request message to obtain a challenge value; the transceiver unit 1210 is specifically configured to send a second request message to the second module, where the second request message includes the challenge value; the transceiver unit 1210 is further configured to receive a second feedback message from the second module, where the second feedback message includes attestation evidence, and the attestation evidence is used by the first module to verify whether the second module is trusted; and the transceiver unit 1210 is further configured to: execute the trusted attestation service based on the attestation evidence, and send the first feedback message to the first node, where the first feedback message is used to feed back a trusted attestation result of the second node to the first node.

In a possible implementation, the first security service is a data upload service of a blockchain, the first request message includes data to be uploaded to the blockchain, and the first feedback message indicates whether the data is successfully uploaded to the blockchain.

In a possible implementation, the first security service is a data download service of a blockchain, the first request message includes indication information of data to be downloaded from the blockchain, and the first feedback message includes downloaded data or indicates that the data fails to be downloaded or is successfully downloaded.

In a possible implementation, the first security service is an encryption service, the first service request message includes a plaintext message, and the first feedback message is a ciphertext message.

In a possible implementation, the first security service is a decryption service, the first service request message includes a ciphertext message, and the first feedback message is a plaintext message.

In a design, the communication apparatus 1200 may be configured to perform an action performed by a second requester in the foregoing method embodiments.

Optionally, the communication apparatus 1200 may perform an action requested to be performed in the foregoing method embodiments. The requester may be a terminal device, a network device, or a security functional module (the second module), or may be a chip or a circuit in a terminal device, a network device, or a security functional module, or may be a logical module or software that can implement all or some functions of a terminal device, a network device, or a security functional module. This is not limited in this application.

Optionally, the communication apparatus 1200 may be the requester, the transceiver unit 1210 is configured to perform a receiving or sending operation of the requester in the foregoing method embodiments, and the processing unit 1220 is configured to perform an internal processing operation of the requester in the foregoing method embodiments.

Optionally, the communication apparatus 1200 may be a device including the requester. Alternatively, the communication apparatus 1200 may be a component configured in the requester, for example, a chip in the requester. In this case, the transceiver unit 1210 may be an interface circuit, a pin, or the like. Specifically, the interface circuit may include an input circuit and an output circuit, and the processing unit 1220 may include a processing circuit.

In a possible implementation, the transceiver unit 1210 is configured to send a first request message, where the first request message is used to request a first module to execute a first security service, the first request message includes an identifier of a second node, the first security service is used to perform at least one of the following operations: calling a security algorithm, obtaining a security parameter, or requesting a second security service from a second module, the requester includes a first node or the second node, the first module is a module serving the first node, and the second module is a module serving the second node; and transceiver unit 1210 is further configured to receive a first feedback message from the first module, where the first feedback message is used to feed back an execution result of the first security service.

In a possible implementation, the requester is the first node, and the first request message includes the identifier of the second node.

As shown in FIG. 13, an embodiment of this application further provides a communication apparatus 1300. The communication apparatus 1300 includes a processor 1310. The processor 1310 is coupled to a memory 1320, the memory 1320 is configured to store a computer program or instructions and/or data, and the processor 1310 is configured to execute the computer program or the instructions and/or the data stored in the memory 1320, so that the methods in the foregoing method embodiments are performed.

Optionally, the communication apparatus 1300 includes one or more processors 1310.

Optionally, as shown in FIG. 13, the communication apparatus 1300 may further include the memory 1320.

Optionally, the communication apparatus 1300 may include one or more memories 1320.

Optionally, the memory 1320 and the processor 1310 may be integrated, or disposed separately.

Optionally, as shown in FIG. 13, the communication apparatus 1300 may further include a transceiver 1330 and/or a communication interface. The transceiver 1330 and/or the communication interface are/is configured to receive and/or send a signal. For example, the processor 1310 is configured to control the transceiver 1330 and/or the communication interface to receive and/or send a signal.

Optionally, a component that is in the transceiver 1330 and that is configured to implement a receiving function may be considered as a receiving module, and a component that is in the transceiver 1330 and that is configured to implement a sending function may be considered as a sending module. In other words, the transceiver 1330 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be referred to as a transmitter machine, a transmitter, a transmitting module, a transmitting circuit, or the like.

In a solution, the communication apparatus 1300 is configured to implement operations performed by the first module in the foregoing method embodiments. For example, the processor 1310 is configured to implement an operation (for example, an operation in S620) performed inside the first module in the foregoing method embodiments, and the transceiver 1330 is configured to implement a receiving or sending operation (for example, an operation in S610 or S630) performed by the first module in the foregoing method embodiments.

In another solution, the communication apparatus 1300 is configured to implement an operation performed by the requester in the foregoing method embodiments. For example, the transceiver 1330 is configured to implement a receiving or sending operation (for example, the operation in S610 or S630) performed by the requester in the foregoing method embodiments.

As shown in FIG. 14, an embodiment of this application further provides a communication apparatus 1400. The communication apparatus 1400 includes a logic circuit 1410 and an input/output interface (input/output interface) 1420.

The logic circuit 1410 may be a processing circuit in the communication apparatus 1400. The logic circuit 1410 may be coupled and connected to a storage unit, and invoke instructions in the storage unit, so that the communication apparatus 1400 may implement the methods and functions in embodiments of this application. The input/output interface 1420 may be an input/output circuit in the communication apparatus 1400, and outputs information processed by the communication apparatus 1400, or inputs to-be-processed data or signaling information to the communication apparatus 1400 for processing.

In a solution, the communication apparatus 1400 is configured to implement operations performed by the first module in the foregoing method embodiments.

For example, the logic circuit 1410 is configured to implement a processing-related operation performed by the first module in the foregoing method embodiments, for example, S620. The input/output interface 1420 is configured to implement a sending and/or receiving-related operation performed by the first module in the foregoing method embodiments, for example, S610. For a specific operation performed by the logic circuit 1410, refer to the foregoing descriptions of the processing unit 1220. For an operation performed by the input/output interface 1420, refer to the foregoing descriptions of the transceiver unit 1210. Details are not described herein.

In another solution, the communication apparatus 1400 is configured to implement an operation performed by the requester in the foregoing method embodiments.

For example, the logic circuit 1410 is configured to implement a processing-related operation performed by the requester in the foregoing method embodiments. For example, the input/output interface 1420 is configured to implement a sending and/or receiving-related operation performed by the requester in the foregoing method embodiments, for example, S610. For a specific operation performed by the logic circuit 1410, refer to the foregoing descriptions of the processing unit 1220. For a specific operation performed by the logic circuit 1410, refer to the foregoing descriptions of the processing unit 1220. For an operation performed by the input/output interface 1420, refer to the foregoing descriptions of the transceiver unit 1210. Details are not described herein.

It should be understood that, the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. To avoid repetition, details are not described herein.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware assembly. The processor may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly executed and accomplished by using a hardware decoding processor, or may be executed and accomplished by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another appropriate type.

According to the method provided in embodiments of this application, this application further provides a computer-readable medium. The computer-readable medium stores program code. When the program code is run on a computer, the computer is enabled to perform the method shown in the method embodiments. For example, when a computer program is executed by a computer, the computer is enabled to implement the method performed by the first apparatus or the method performed by the second apparatus in the foregoing method embodiments.

An embodiment of this application further provides a computer program product including instructions. When the instructions are executed by a computer, the computer is enabled to implement the method performed by the first apparatus or the method performed by the second apparatus in the foregoing method embodiments.

An embodiment of this application further provides a communication system, including a first apparatus and a second apparatus.

For explanation and beneficial effect of related content in any communication apparatus provided above, refer to the corresponding method embodiment provided above. Details are not described herein.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The data orchestration apparatus and the data processing apparatus in the foregoing apparatus embodiments correspond to the data orchestration apparatus and the data processing apparatus in the method embodiments, and corresponding modules or units perform corresponding steps. For example, a communication unit (transceiver) performs a receiving or sending step in the method embodiments, and a processing unit (processor) may perform a step other than the sending and receiving steps. For a function of a specific unit, refer to a corresponding method embodiment. There may be one or more processors.

The terms such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software function unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
executing, by a first module, a first security service based on a first request message received from a requester, wherein the first security service is used to perform at least one of the following operations: calling a security algorithm, obtaining a security parameter, or requesting a second security service from a second module, the first request message is used to request one or more trusted services, the requester comprises a first node or a second node, the first module is a module serving the first node, and the second module is a module serving the second node; and
sending, by the first module, a first feedback message to the requester, wherein the first feedback message is used to feed back an execution result of the first security service to the requester.

2. The method according to claim 1, wherein the requester is the first node, and the first request message comprises an identifier of the second node.

3. The method according to claim 1 or 2, wherein the first security service is an authentication service; and the executing, by a first module, a first security service comprises:
executing, by the first module, the authentication service based on the first request message, to obtain a first parameter set;
sending, by the first module, a second request message to the second module through the first node and the second node, wherein the second request message comprises a second parameter set, and the second parameter set is from the first parameter set;
receiving, by the first module, a second feedback message from the second module through the first node and the second node, wherein the second feedback message comprises an authentication response, and the authentication response is used to feed back an authentication service result of the second module to the first module; and
executing, by the first module, the authentication service based on the authentication response, and sending the first feedback message to the first node, wherein the first feedback message is used to feed back an authentication result of the second node to the first node.

4. The method according to claim 1 or 2, wherein the first security service is a trusted attestation service; and the executing, by a first module, a first security service comprises:
executing, by the first module, the trusted attestation service based on the first request message to obtain a challenge value;
sending, by the first module, a second request message to the second module, wherein the second request message comprises the challenge value;
receiving, by the first module, a second feedback message from the second module, wherein the second feedback message comprises attestation evidence, and the attestation evidence is used by the first module to verify whether the second module is trusted; and
executing, by the first module, the trusted attestation service based on the attestation evidence, and sending the first feedback message to the first node, wherein the first feedback message is used to feed back a trusted attestation result of the second node to the first node.

5. The method according to claim 1, wherein the first security service is a data upload service of a blockchain, the first request message comprises data to be uploaded to the blockchain, and the first feedback message indicates whether the data is successfully uploaded to the blockchain.

6. The method according to claim 1, wherein the first security service is a data download service of a blockchain, the first request message comprises indication information of data to be downloaded from the blockchain, and the first feedback message comprises downloaded data or indicates that the data fails to be downloaded or is successfully downloaded.

7. The method according to claim 1 or 2, wherein the first security service is an encryption service, the first service request message comprises a plaintext message, and the first feedback message is a ciphertext message.

8. The method according to claim 1 or 2, wherein the first security service is a decryption service, the first service request message comprises a ciphertext message, and the first feedback message is a plaintext message.

9. A communication method, comprising:
sending, by a requester, a first request message, wherein the first request message is used to request a first module to execute a first security service, the first security service is used to perform at least one of the following operations: calling a security algorithm, obtaining a security parameter, or requesting a second security service from a second module, the requester comprises a first node or a second node, the first module is a module serving the first node, and the second module is a module serving the second node; and
receiving, by the requester, a first feedback message from the first module, wherein the first feedback message is used to feed back an execution result of the first security service.

10. The method according to claim 9, wherein the requester is the first node, and the first request message comprises an identifier of the second node.

11. A communication apparatus, comprising:
a processing unit, configured to execute a first security service based on a first request message received from a requester, wherein the first security service is used to perform at least one of the following operations: calling a security algorithm, obtaining a security parameter, or requesting a second security service from a second module, the first request message is used to request one or more trusted services, the requester comprises a first node or a second node, the first module is a module serving the first node, and the second module is a module serving the second node; and
a transceiver unit, configured to send a first feedback message to the requester, wherein the first feedback message is used to feed back an execution result of the first security service to the requester.

12. The apparatus according to claim 11, wherein the requester is the first node, and the first request message comprises an identifier of the second node.

13. The apparatus according to claim 11 or 12, wherein the first security service is an authentication service, and the processing unit is specifically configured to execute the authentication service based on the first request message, to obtain a parameter set of a first authentication service; the transceiver unit is specifically configured to send a second request message to the second module through the first node and the second node, wherein the second request message comprises a parameter set of a second authentication service, and the parameter set of the second authentication service is from the parameter set of the second authentication service; the transceiver unit is further configured to receive a second feedback message from the second module through the first node and the second node, wherein the second feedback message comprises an authentication response, and the authentication response is used to feed back an authentication service result of the second module to the first module; and the transceiver unit is further configured to: execute the authentication service based on the authentication response, and send the first feedback message to the first node, wherein the first feedback message is used to feed back an authentication result of the second node to the first node.

14. The apparatus according to claim 11 or 12, wherein the first security service is a trusted attestation service, and the processing unit is further configured to execute the trusted attestation service based on the first request message to obtain a challenge value; the transceiver unit is further configured to send a second request message to the second module, wherein the second request message comprises the challenge value; the transceiver unit is further configured to receive a second feedback message from the second module, wherein the second feedback message comprises attestation evidence, and the attestation evidence is used by the first module to verify whether the second module is trusted; and the transceiver unit is further configured to: execute the trusted attestation service based on the attestation evidence, and send the first feedback message to the first node, wherein the first feedback message is used to feed back a trusted attestation result of the second node to the first node.

15. The apparatus according to claim 11, wherein the first security service is a data upload service of a blockchain, the first request message comprises data to be uploaded to the blockchain, and the first feedback message indicates whether the data is successfully uploaded to the blockchain.

16. The apparatus according to claim 11, wherein the first security service is a data download service of a blockchain, the first request message comprises indication information of data to be downloaded from the blockchain, and the first feedback message comprises downloaded data or indicates that the data fails to be downloaded or is successfully downloaded.

17. The apparatus according to claim 11 or 12, wherein the first security service is an encryption service, the first service request message comprises a plaintext message, and the first feedback message is a ciphertext message.

18. The apparatus according to claim 11 or 12, wherein the first security service is a decryption service, the first service request message comprises a ciphertext message, and the first feedback message is a plaintext message.

19. A communication apparatus, comprising:
a transceiver unit, configured to send a first request message, wherein the first request message is used to request a first module to execute a first security service, the first security service is used to perform at least one of the following operations: calling a security algorithm, obtaining a security parameter, or requesting a second security service from a second module, the requester comprises a first node or a second node, the first module is a module serving the first node, and the second module is a module serving the second node, wherein
the transceiver unit is further configured to receive a first feedback message from the first module, wherein the first feedback message is used to feed back an execution result of the first security service.

20. The apparatus according to claim 19, wherein the requester is the first node, and the first request message comprises an identifier of the second node.

21. A communication apparatus, comprising:
a processor, configured to execute a computer program stored in a memory, to enable the communication apparatus to perform the communication method according to any one of claims 1 to 10.

22. A computer-readable storage medium, wherein the computer-readable storage medium stores a computer program, and when the computer program is run on a computer, the computer is enabled to perform the communication method according to any one of claims 1 to 10.

23. A chip system, comprising a processor, configured to invoke a computer program from a memory and run the computer program, to enable a communication device on which the chip system is installed to perform the communication method according to any one of claims 1 to 10.
